# EUROPEAN PATENT SPECIFICATION

(11) **EP 3 350 475 B1**
(45) Date of publication and mention of the grant of the patent: **04.11.2026**
(21) Application number: 16845434.6
(22) Date of filing: 19.09.2016
(51) Int. Cl.: F16G 3/10, B65G 15/30, F16G 3/16

(54) **ADVANCED COMPONENT BASED CONVEYOR BELT SPLICER**
ERWEITERTE KOMPONENTENBASIERTE FÖRDERBANDSPLEISSVORRICHTUNG
JOINTEUR DE BANDES POUR CONVOYEUR À BASE D'UN COMPOSANT AVANCÉ

(30) Priority: 18.09.2015 GB 201516626
(43) Date of publication of application: 25.07.2018
(60) Divisional application: 24215951.5 / 4 553 339
(73) Proprietor: Almex Canada Limited, Parry Sound, Ontario P2A 0B2 (CA)
(72) Inventor: SHAW, Timothy, Stoney Creek, Ontario L8J 2W8 (CA)
(74) Representative: Stolmár & Partner Intellectual Property GmbH
(86) International application number: PCT/CA2016/051097
(87) International publication number: WO 2017/045083

(56) References cited:
- EP-A1- 2 425 962
- WO-A1-2010/012117
- WO-A1-2012/135945
- WO-A1-2014/172782
- DD-A1- 148 200
- GB-A- 1 325 063
- GB-A- 425 204
- US-A1- 2011 089 620

## Description

### FIELD OF THE INVENTION

The present invention relates to repair of failed conveyor belts by compressive binding of a length of splice material into the failed belt with the application of process heating.

### BACKGROUND

For more than a century there has been a need for a simple and effective way to accurately vulcanize a conveyor belt splice in place without removal of the belt from its operating machinery. This often requires working in the most extreme and ackward conditions, indoors and outdoors, using heavy tools. The placing of such tools is critical their location is determined entirely by the operating conditions of the physical plant where the belt is used. These can be highly elevated conditions on the one hand or completely enclosed conditions on the other.

Difficulties in manoevering and placement are rapidly compounded when the belt in question is very wide, as much as 12 feet or more or the actual length of the splice is large, as much as 3-4 feet in the direction of conveyor travel.

### DESCRIPTION OF THE PRIOR ART

Various attempts at operative solutions useful in the field are shown in the patent art.

Recent technology involves the use of a pair of heat conductive platens which are placed over and under the belt splicing so as to at least completely cover the splice area being the length of the splice times the width of the belt. Upper and lower heating pads are positioned over the splice area. Such heating pads are known to include electrical resistance wire embedded in a pad of heat conductive silicone so as to provide the necessary heat and transmit the compressive stresses vertically through the splice. Above and below the heating pads are cooling platens used in sequence with the heating so as to cure the belt splice in the most optimal conditions. Control of the heating, cooling and pressure characteristics of the splice are critical as the belt will be put back into heavy industrial service almost immediately after the splice is concluded.

### DESCRIPTION OF THE PRIOR ART

GB 425204 A relates to an apparatus adapted to be operated by a vice to clinch staples to the end of a belt. The presser bars are secured to plates constrained to remain parallel to each other and to the staple holder by pairs of links, which are pivoted to the plates and to blocks sliding in slots underneath the stapleholder.
DD 148 200 A1 refers to a transportable device for vulcanizing founders. The invention relates to a device with the aid of endless connections of transport belts be prepared for vulcanization. The aim of the invention is to reduce the assembly and transport times, to allow the use of poorly accessible tape systems as much as possible, as well to increase the quality of vulcanizing. With the invention the aim is achieved by transportable vulcanization device which can be mounted in a few steps at the side and a high and permanent pressure achieved by a force generating device in conjunction with a system for a power transportation and for pressure increasing. According to the invention the vulcanizing device consists of a compact press upper and lower press part, which are pressed against each other by means of hydraulic cylinders, deflection levers and toggle lever system.
GB1325063 A relates to a belt-fastening machine having a jaw unit comprising a pivot block which is movable to actuate a pair of jaws carried by pivoted levers. Links are pivotally attached to the levers and are provided with slots which engage a pivot on the block. The pivot block is provided with a roller which is adapted to rock the lever before the lost motion afforded by the slots is taken up, whereby the jaw is able to make an initial closing movement of the splayed limbs of a fastener element before a staple is driven by the jaw. The pivot block may be moved by a screw provided with handles.
WO 2012/135945 A1 refers to a tension link for a belt splicer. The invention relates to a tension link to a belt-splicer that is based on a rope loop of high strength synthetic fibre, wound around bosses, where the bosses and the loop are encapsulated in module plastic. The link connects cross-beams of the splicer. Additional features of the link include couplings which permit rotation when the beams deflect in bending. The links can be stored inside the hollow interior of the beams. The couplings include eccentrically mounted blocks that can be oriented to adjust the length of the link.
WO 2014/172782 A1 refers to an air cooled belt splicer. The invention relates to minimazing the cool-down time by the use of a cooler having integral fins of high surface area, and the use of high efficiency fans. The heat-up time is minimized by the low mass of the cooler, and the prevention of transmission of heat to the housing.

The temperature of heating must be uniformly +/- 3 degrees C across the whole splice, preferably O degrees C under uniform and constant pressure. Cooling must be carefully controlled and uniform across the splice as well. Such belt splicers are effective for purpose but require custom engineering, especially for larger sizes, are costly to manufacture and maintain in stock and difficult to deliver intact when just in time tool availability is required. Many industrial locations would of necessity maintain a splicer in tool inventory in the event of a belt failure as a single conveyor belt failure can bring a production facility to an abrupt and catastrophic halt without notice. Given that these belts are critical components of heavy industry belt failure itself can spread damage across a facility and cause personnel injury.

Thus, there is a need for a belt splicer system which can be delivered quickly into remote and difficult locations from stock which is lightweight and simple to use while maintaining safety and process conditions.

Efforts to date have been focused upon a single platen arrangement in order to maintain process conditions with a component clamping arrangement which is assembled into single clamping sections in situ so as to form the necessary platen clamp from the group, a plurality of individual clamping components. Structural requirements for such clamping components are quite high as the clamping surfaces must be flat. This results in the use of large quantities of expensive fabrication materials such as aluminum for lighthess and component-to component uniformity requirements.

The need for heating and cooling uniformity to +/- 3 degrees C plus the need for uniform and controllable pressure with a view to overall size, complexity, weight and the shear cumbersome nature of some prior art belt splicers, given the extreme environments, has lead to the widespread use of extrusions of expensive aluminum based metals.

Large sections are required not only to bear significant loads but also to act as uniform heat sources and sinks (forced cooling) while maintaining process pressures. These same large sections dictate that design improvements be machined or welded components, the former greatly increasing delivery times and cost, the later adding stress bending issues which continue from manufacture through distribution and long in to the conditions of actual use.

In the past, heating components have been based upon a heating wire strand uniformly and fully embedded in a heat transmissive silicone pad where the pad transfers the process pressure load around the heating wire to the process area. In earlier days, this wire heating was applied wherever space permitted often to the sacrifice of heating uniformity and speed.

### ADJUSTABLE TENSION-LINK FOR BELT-SPLICER

This aspect of the invention lies in the field of splicers for splicing conveyor belts. The invention concerns a belt splicer according to claim 1.

### LIST OF DRAWINGS:

Fig.1 is an elevation of a conveyor belt splicer, looking along the direction of travel of the belt.
Fig. 2 is the same view as Fig. 1 of a portion of the splicer, showing the left-side tension-link of the splicer. Fig. 2 also shows some of the components of the splicer that are located between the crossbeams and between the tension links.
Fig. 3 is an exploded pictorial view of the left-side tension-link.
Fig. 4A is the same view as Fig. 2, showing the left-side tension-link assembled with a first clevis-pin. Here, the between-crossbeams components are omitted.
Fig. 4B is the same view as Fig. 4A, showing the left-side tension-link assembled with a second clevis-pin.
Fig. 4C is the same view as Fig. 4A, showing the left-side tension-link assembled with a third clevis-pin.
Figs. 5A, B and C show the different profiles of clevis-pins that make up a kit of clevis-pins of the left-side tension-link.

### DESCRIPTION OF THE PREFERRED EMBODIMENTS

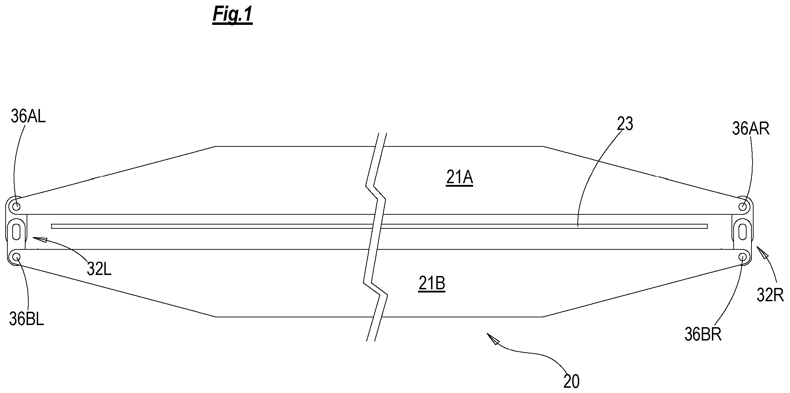

The belt-splicer 20 (Fig. 1) includes above- and below-crossbeams 21A, 21B. The crossbeams 21 span across the full width of the conveyor-belt 23 to be spliced. The belt being spliced comprises two belt-ends 23A,23B, which are to be adhered together.

Usually, the belt users prefer that the finished spliced-zone of the belt be of the same thickness as the parent belt. The two belt-ends 23A,23B typically are interfaced conventionally in e.g a tapered or chamfered overlapping configuration, or e.g in a zig-zag pattern, being generally so configured as to create a large area of interface contact between the two belt-ends.

Often, especially when the belts are of rubber, splicing involves applying liquid rubber gum to the contact areas of the belt-ends, and subjecting the splice zone to heat and pressure. Under controlled conditions, the rubber undergoes vulcanization. The vulcanization having been done properly, the splice is (almost) as strong as the parent belt.

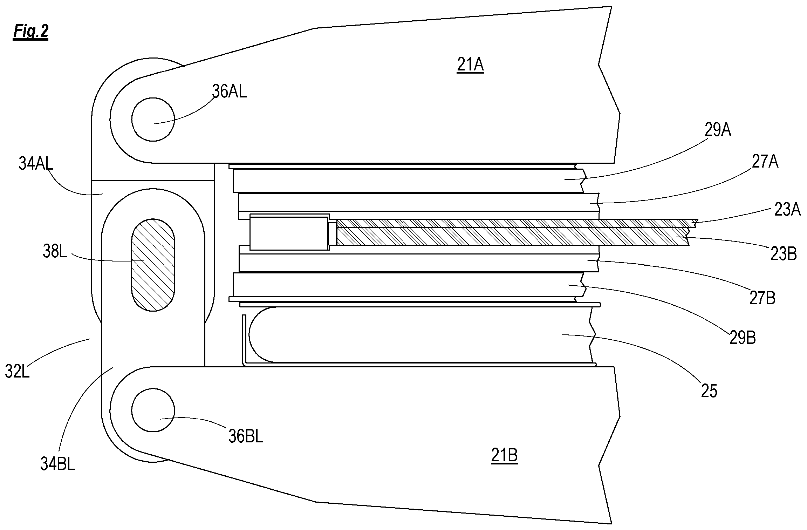

In Fig. 1, of the components that lie between the crossbeams, only the belt itself is shown. Fig. 2 shows the rest of the between-beams components, in detail, along with the two overlapping ends 23A,23B of the belt 23. The portion 23A belongs to the end of the belt that extends into the plane of Fig. 2, and the portion 23B belongs to the end of the belt that extends out of Fig. 2.

The between-beams components in Fig. 2 include an inflation-bag 25. The inflation-bag may be located above or below the belt 23, depending on whether is it easier to accommodate the deflection movements upwards or downwards in the particular case.

Also included between the crossbeams is an above-heater-platen 27A and a below-heater-platen 27B. (In some belt-splicers, only one heater-platen is provided -- usually below the belt.) Also included are above- and below-heat insulation-layers 29A, 29B.

The present belt-splicer 20 also includes provision for forced cooling of the splice interface, after the period of heating. Rapid forced cooling is preferred, when rapidity might be instrumental in procuring a more favourable molecular structure in the vulcanized rubber, compared with slow ambient cooling.

The crossbeams 21 are long enough to protrude beyond the left and right side edges of the belt 23. The above-beam 21A is provided with a protruding above-left-end-boss 30AL, while the below-beam 21B is provided with a protruding below-left-end-boss 30BL.

The splicer 20 includes two tension-links, being a left tension-link 32L and a right tension-link 32R. The left tension-link 32L comprises an above-link-element 34AL and a below-link-element 34BL. Pivot-pins 36AL,36BL secure the above- and below-left-link-elements 34AL,34BL respectively to the above- and below-end bosses 30AL,30BL.

The above-link-element 34AL is bifurcated or forked, and forms a clevis. The below-link-element 34BL is plain, and is secured to the above-link-element 34AL by a left-clevis-pin 38L. The clevis-pin 38L passes through an above-clevis-hole 40AL in the above-link-element 34AL, and through a below-clevis-hole 40BL in the below-link-element 34BL.

When the inflation-bag 25 is inflated (with a gas (e.g air) or a liquid (e.g.water) under pressure) the resulting pressure is applied to the splice-zone of the two ends of the belt. The pressure is reacted by the above- and below-crossbeams 21A,21 B, and in turn by the two tension-links 32L,32R. The pressure urges the crossbeams 21 to move apart in the up/down direction, and the tension-links 32 prevent that from happening.

In a typical large belt-splicer, the inflation-bag 25 applies pressure over an area of, say, 0.25 sq.metres (400 sq.ins). The inflation pressure is typically ten atmospheres (150psi), so that the force reacted by the left and right tension-links 32L,34R is typically thirty tonnes, i.e fifteen tonnes in each tension-link. There is considerable potential energy stored in the inflation-bag, during operation, and if either tension-link 32 were to fail, serious injuries might follow.

The designers must see to it that the tension-links 32 are capable of sustaining the imposed forces, with a suitable safety margin. But not only that: the tension-links 32 have to be assembled and disassembled with each splicing event, and the designers have to ensure that the tension-links 32 can only be assembled safely and properly. Also, over a long service period, the components of the tension-links can become less able to perform their functions. Also, inexperienced operators can make dangerous mistakes; and even the experienced operators can start to become careless as the operations become familiar and routine. It is up to the designers to see to it that these possibilities do not put the operators (and others) in danger.

The degree to which the inflation-bag 25 is inflated during operation should be kept to a minimum. Too large an inflation, and portions of the material of the bag can start to bulge, perhaps leading to failure. Thus it is desirable, once the belt-splicer 20 has been assembled onto and around the two ends of the belt 23, and made ready for the splicing operation to commence, that the tension-links 32 should be made as short as possible, thereby minimizing the degree to which the bag 25 is called upon to inflate and expand.

It is preferred that the lengths of the left and right tension-links 32L,R should be adjustable as to their (vertical) lengths.

The common reason why the length of the tension-links 32 needs to be adjustable is to cater for different thicknesses of the belts being spliced. To that extent, the required length of the tension-links can be predicted ahead of time. However, it is preferred that the manner of adjustment should be such that the tension-links can be finally adjusted by the operators, at the time of final assembly of the belt-splicer onto the belt.

These preferences and functionalities can be attributed to the structure of the present tension-links 32L,32R.

The clevis-holes 40AL,40BL in the link-elements 34 are of (vertically) elongated profile, and the clevis-pin 38L is of a complementary profile. The profile comprises two semi-circles joined by two straights.

Several clevis-pins 38 are provided (i.e. a kit of clevis-pins is provided), which differ from each other as to the lengths of their profile-straights. The operators select which one of the several clevis-pins, in the kit, to use for the particular splicing event, on the basis of which of the several clevis-pins will minimize the degree of inflation of the bag 25 (while enabling the splicer to be assembled). The adjustability of the length of the tension-link derives from the fact that: the larger the clevis-pin (i.e. the longer its profile straights), the smaller the overall length of the tension-links 32.

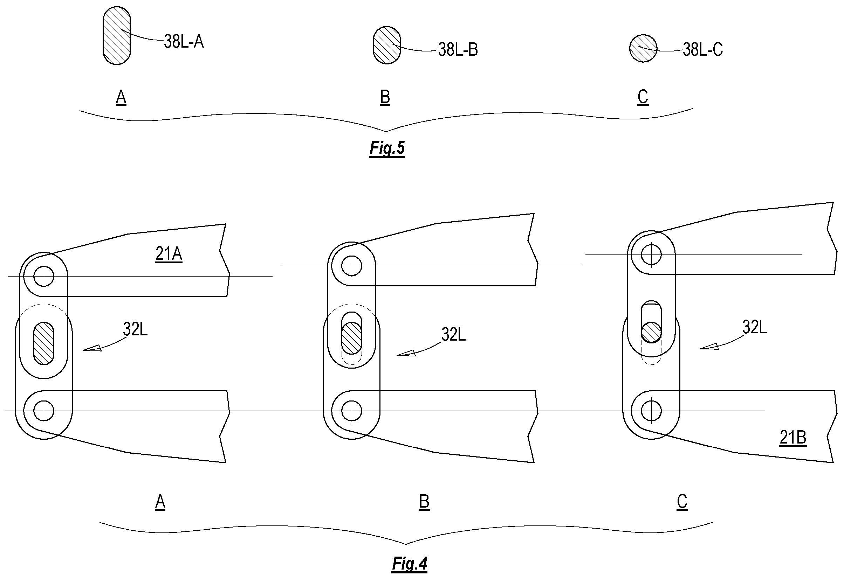

Figs.4,5 show four sizes of clevis-pin 38. The clevis-pin 38L-A shown in Figs.4A,5A has the same profile as the clevis-holes 40 in the link-elements 34. (Or rather, of course, the clevis-pin is a little smaller than the holes, to enable assembly of the clevis-pin into and through the clevis-holes.) As shown in Fig.4A, the clevis-pin 38L-A is selected when the event requires the tension-link to be as short as possible. The clevis-pin 38L-A fills both the above-clevis-hole 40AL and the below-clevis-hole 40BL, preventing the link-elements 34L from moving apart.

The clevis-pin 38L-C shown in Figs.4C,5C is actually circular (i.e its profile straights are of zero length). As shown in Figs.4C, the clevis-pin 38L-C is selected when it is required to make the tension-link as long as possible. The clevis-pin 38L-C enables or allows the link-elements to move apart the greatest distance.

The clevis-pin 38L-B shown in Figs.4B,5B is of intermediate size, and enables the operators to tailor the size of the tension-link to the particular requirements. Several intermediate sizes may be included in the kits of clevis-pins.

The splicer or splicers that create the splice-zone should include as many kits of clevis-pins as there are tension-links in the splice-zone. And each kit should include the same range of sizes of pins, so that all the tension-links can be the same size.

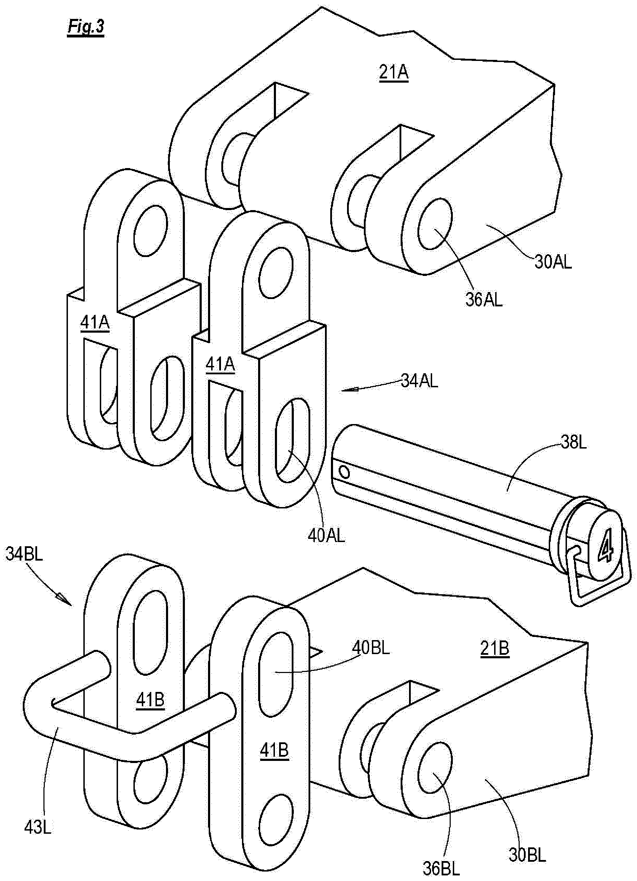

Again, it is important that the left and right tension-links should both be of equal length, after the length adjustment. For this reason, the designers should provide a simple foolproof indicator, for indicating just what adjustments have been made, which preferably should be visible just before the splicing operation starts, and after all the assembly and preparations for the splice have been made. Fig. 3 shows the numeral "4" imprinted on the end of the clevis-pin, as an identifier of the size of the particular clevis-pin profile -- which makes it a simple matter for the operators to check that both tension-links are using the same size of clevis-pins from the respective kits of clevis-pins (each kit being identical). It is important that the left and right tension-links of the belt-splicer should be both the same length, and the operators should see to it that this is so. Fig. 5 shows (the profiles of) the clevis-pins (or some of the clevis-pins) that make up the kit. Colours can be used to differentiate the different sizes.

There being three sizes of clevis-pin 38 (or whatever number of sizes is deemed to be convenient and efficient), all but the selected pins are standing idle during the particular splicing event. It is advisable that all the clevis-pins not currently being used should be retained on the apparatus, and preferably all the clevis-pins should be held captive by being tethered to the crossbeams. The prudent designer will provide suitable receptacles into which the set of clevis-pins can be placed, e.g within the form of the crossbeams.

The components of the belt-splicer 20 are transported to the place where the splice is to be carried out. At this time, the two crossbeams 21A,21B are separated from each other. The above-left-link-element 34AL and the above-right-link-element are never detached from the above-crossbeam 21A (except for service, etc) and the below-left- link-element 34BL and the below-right-link element are never detached from the below-crossbeam 21B during transport. However, during transport, the clevis-pins 38 are not assembled to the respective link-elements. The kit of clevis-pins is transported as a separate sub-assembly (which is why the kit should be housed in a receptacle within the structure of the crossbeam, or the individual clevis-pins of the kit should be tethered to the crossbeams, or both.) Generally, the operators know the nominal belt thickness before arriving at the splicing site, and can make sure that the kits contain at least the size of clevis-pin that goes with that nominal thickness of the belt. However, the operators should check that the other sizes of clevis-pins are available, in case of unpredicted variations.

Provision is made, at the ends of the clevis-pins 38, for ensuring that the clevis-pins, having been fully and properly assembled into the clevis-holes in the link-elements, remain retained within the clevis-holes, and cannot inadvertently become mis-positioned, for any reason, until deliberately moved by the operators. The clevis-pin can be provided with through-holes for attachment of pull-rings, spring-clips, retainers, or the like. There are many proprietary systems for ensuring that clevis-pins cannot improperly become displaced from their clevis holes, and yet are easy to assemble and disassemble, and designers should select an appropriate system.

The expression "tension-link", above, has been indicated as including an above-link-element and a below-link element. In fact, the above-link-element 34AL, as may be seen from Fig. 5, comprises two above-link-element-structures 41A, side-by side. The below-link-element 34BL, likewise, comprises two below link-element-structures 41 B, side-by side. The "tension-link" is the aggregate of however many such link-element-structures are present (and the number can be one, two, or more than two, as required.)

In Fig. 3, the below-link-element 34BL, comprising the two below-link element-structures, is provided with a handle 43B. The handle 43B serves to join the two below-link-element-structures, and to keep them in their side-by side relationship. The handle 43B also serves to help the operator manipulate the link elements when assembling and removing the clevis-pin. The above-link-element 34AL is also provided with a handle, but this is not shown in Fig. 3.

The extent of the (vertical) adjustable-range of length of the tension-link 32 is determined by the (vertical) slot-lengths of the clevis-holes 40, and the (vertical) length of the profile of the clevis-pins 38. Typically, the need for adjustment is based mainly on the differences in nominal thickness of the various belts being spliced. However other variables might be present, which contribute to the need for the tension-links to be of adjustable length - and conveyor-belts do vary from their nominal thickness. Typically, the designers should provide a range of adjustment of two or three cm -- or more, of course, if the requirement (and the room) exists. The clevis-pin is subjected to shear-stress, under load, and the designers must see to it that even the smallest clevis-pins in the kit are able to support the maximum stress with a suitable safety margin. (It is not necessary that the smallest clevis-pins in the kit should have zero-length profile straights.)

The (vertical) length of the present tension-links is small, when compared with tension-links in other designs of belt-splicer. In the other belt-splicers, typically the crossbeams are, by comparison, significantly taller, vertically, at their ends, than the present crossbeams. The taller the crossbeams, the longer the tension-links can be; and a longer tension-link can include the kind of length adjustment facility that is based on a screw-thread. Screw-thread adjusters can be convenient in those cases (although screw-thread adjusters can have their own problems).

As shown in patent publication US-2014-0014275 (SHAW), vertically-tall crossbeams can be equipped with the markedly-different tension-links there depicted/described. However, that depicted kind of tension-link, though highly advantageous where it can be accommodated, is not suitable to be made in short lengths. In the present case, where the crossbeams are short, vertically, at the ends, the tension-links are themselves short. The present manner of adjustment is a highly suitable way of providing the required range of adjustment, when the tension-links are short.

As mentioned, in the present case, the splicer includes provision for forced cooling. The forced cooling is done by means of e.g. water pipes embedded in the heater platens 27. The pipes are disposed side-by-side with the (electrical) heating cables required for the heating function, within the heater-platen. Thus, in fact, the present heater-platen should rather be regarded as a combined heating-and cooling-platen. The combined-platen occupies hardly more than the vertical space that would be required anyway for a platen that contained just the heating elements.

Previously, the cooling function has been provided in a separate cooling platen structure. This may be regarded as disadvantageous because the stack of the two platens inevitably occupies considerably more vertical space than one single combined heating-and-cooling platen. But also, when the heating platens are next to the belt, the cooling platens have to exert their thermal effects through the heating platens -- which is significantly inefficient. (If the cooling platens were the platens that lie next to the belt, the heating platens would then have to exert their thermal effects through the heating platens -- which is just as inefficient.) Thus, the height of the stack of belt-splicer-components that lie between the crossbeams, in the present design, is significantly reduced when the separate heating-platen and cooling-platen are replaced by a combined heating and-cooling platen. The present as-described manner of arranging tension-link length-adjustability, being particularly suitable for use with crossbeams of low vertical height, is likewise also particularly suitable for use when the stack of components between the crossbeams is of low vertical height.

As mentioned, the pivot-pins 36 enable the tension-links to pivot, under load, relative to the crossbeams. The lengths of the crossbeams are dictated by the width of the belt, which can be a considerable span. The crossbeams can undergo considerable deflection when under a load of several tonnes, and in fact the crossbeams can so deflect as to be several millimetres further apart in the middle of the span than at the edges of the belt. Such deflection gives rise to a significant rotational movement of the ends of the crossbeams relative to the tension-links (the tension-links themselves remain vertical during operation), and such rotation is accommodated by the pivot-pins 36.

It is preferred that the left-clevis-pin 38L is long enough to extend right through both (or all) the link-element-structures, as in the as-depicted design. However, it is not ruled out that shorter clevis-pins could be used, which each extend through e.g. just one of the link-element-structures. Of course, if more, shorter, clevis-pins are used, the operators must take care to ensure that all the clevis-pins in the splicer are the same size.

The clevis-pins 38 and the clevis-holes 40 are running-track-shaped, i.e have the shape of two semi-circles separated by two straights. Other shapes can be used - e.g. rectangular (preferably with rounded corners). The important aspects are that the components containing the shapes should be strong enough to accommodate the imposed stresses, should be inexpensive to manufacture, and should not pose problems of inconvenience during operational assembly and disassembly.

Some of the components and features in the drawings and some of the drawings have been given numerals with letter suffixes, which indicate left, right, etc. versions of the components. The numeral without the suffix has been used herein to indicate the components or drawings generically or collectively.

Terms of orientation (e.g "up/down", "left/right', and the like) when used herein are intended to be construed as follows. The terms being applied to a device, that device is distinguished by the terms of orientation only if there is not one single orientation into which the device, or an image (including a mirror image) of the device, could be placed, in which the terms could be applied consistently.

Terms used herein, such as "straight", "vertical", and the like, which define respective theoretical constructs, are intended to be construed according to the purposive construction.

The numerals used herein are summarized as follows:
20 - the belt-splicer
21A, 21B - the above-, below-crossbeams
23A, 23B - the upper and lower to-be-spliced ends of the belt
25 - the inflation bag
27A, 27B - the above-, below-heater-platens
29A, 29B - the above-, below-heat-insulation layers
30AL - the above-left-end-boss of the above-crossbeam 21A
30BL -the below-left-end-boss of the below-crossbeam 21B
32L, 32R - the left-, right-tension-links
34AL - the above-left-link-element of the left-tension-link
34BL - the below-left-link-element of the left-tension-link
36AL, 36BL - the above-, below-left-link-pivot-pin
36AR,36 BR - the above-, below-right-link-pivot-pin
38L - the left clevis-pin
38L-A - the largest clevis-pin
38L-B - the intermediate clevis-pin
38L-C - the smallest clevis-pin
40AL - the above-clevis-hole in the above-link-element 34AL
40BL - the below-clevis-hole in the below-link-element 34BL
41A, 41B - the above-, below-link-element-structures
43B - the below-handle.

### List of the drawings:

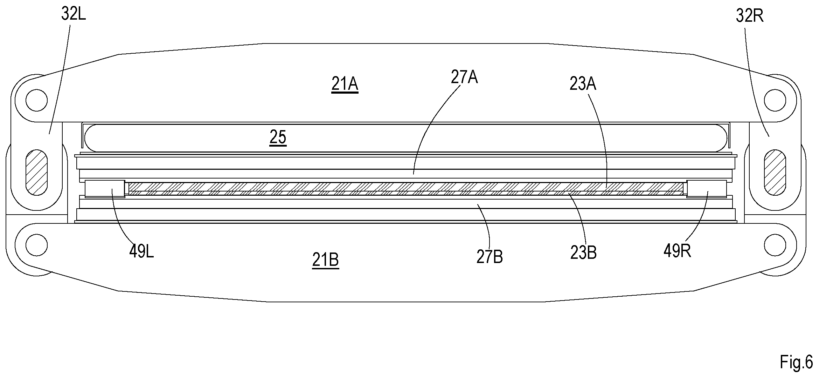

Fig.6 is an elevation of a conveyor belt splicer, looking along the direction of travel of the belt.

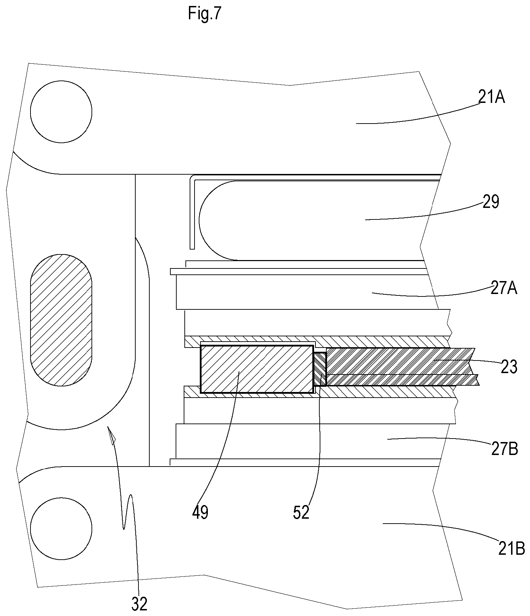

Fig.7 is the same view as Fig.6 of a portion of the belt-splicer, showing a left-side edge-iron of the splicer. Fig.7 also shows some of the components of the splicer that are located in the vicinity of the edge-iron.

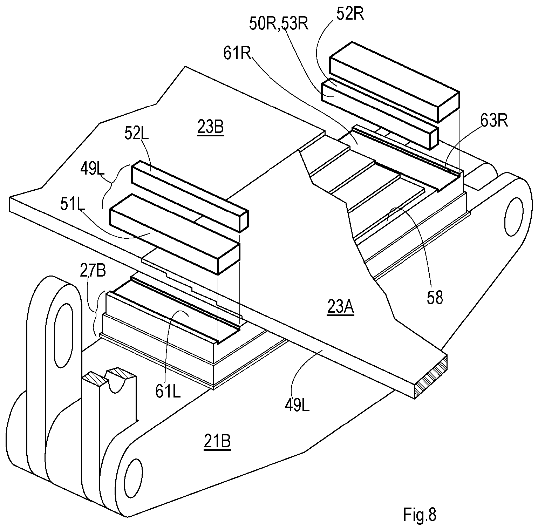

Fig.8 is a pictorial diagrammatic view of the belt-splicer, shown during a stage of assembly.

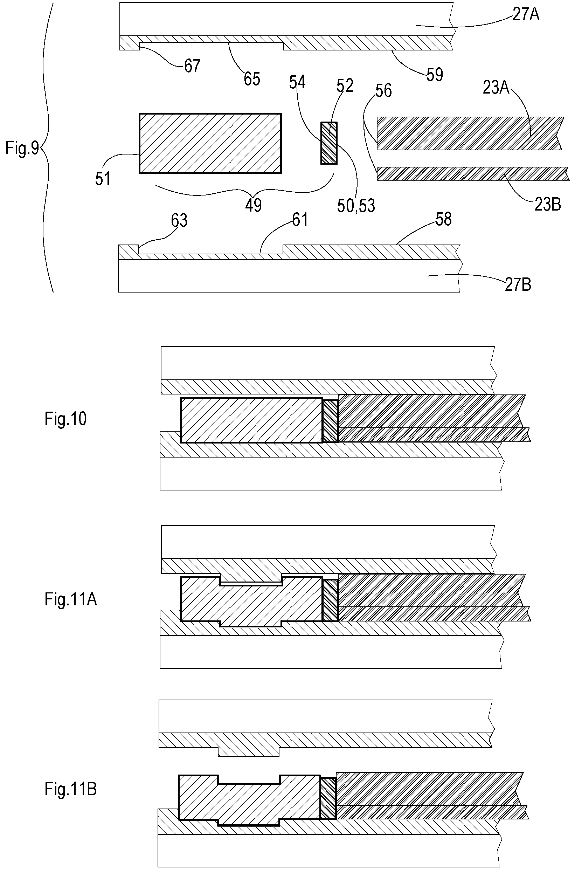

Figs.9, 10, 11A are portions of the same view as Fig.7, showing some variants with a single stop and a pair of tongue and groove stops.
Fig.11B is the same view as Fig.11A, but shows the components in a separated condition.

### DESCRIPTION

In Fig.6, the belt-splicer 20 includes above- and below-crossbeams 21A,21B. The crossbeams 21 span across the full width of the conveyor-belt 23 to be spliced. The belt being spliced comprises two belt-ends 23A,23B, which are to be adhered together.

Left and right edge-irons 49L,49R are provided. Each edge-iron has a middle-facing-surface 50L,50R ("middle" means the surface faces towards the middle of the belt) and an outward-facing-surface 51L,51R. The edge-irons 49L,49R are supplemented by left and right filler-strips 52L,52R, each of which has a middle-facing-surface 53L,R and an outward-facing-surface 54L,R.

During splicing, the belt-ends 23A,23B are compressed between an above heater-platen 27A and a below-heater-platen 27B. (In fact, the heater-platens, in the depicted design, are combined heating-and-cooling-platens, but are referred to, here, as heater-platens.) The compression forces on the belt, during splicing, are transmitted through the heater-platens. An upward-facing-surface 58 of the below-heater-platen 27B is in close contact with the underside of the belt 23, and a downward-facing-surface 59 of the above-heater-platen 27A is in close contact with the overside of the belt 23.

In the splicer of Fig.7, a below-groove or slot 61L has been provided, which extends downwards into the material of the below-heater-platen 27B, down from the upward-facing-surface 58.

The outer wall of the groove 61L is formed as a middle-facing-abutment surface 63L. In Fig.7, the outward-facing-surface 51L of the left-edge-iron 49L abuts against the middle-facing-abutment-surface 63L of the left-below-groove 61L. Similarly, the outward-facing-surface 51R of the right-edge-iron 49R abuts against the middle-facing-abutment-surface 63R of the right-below-groove 61R.

The left filler-strip 52L fits between the left side-edge 56L of the belt 23 and the middle-facing-surface 50L of the left edge-iron 49L. The present filler strips 52 are made of rubber, and are somewhat compressible. The material of the filler-strips should be selected on the basis of being compressible, in the sense of being able to conform to (and thereby to make a seal against) the (possibly uneven) side edges of the two ends 23A,23B of the belt to be spliced. Also, conveyor belts are not noted for their freedom from variations in the width of the belt, not only after a period of service, but as-manufactured. The designers' aim, in selecting the material and the dimensions of the filler-strips, should be to contain the liquid rubber which tends to extrude itself out of the splice-zone, when the splice-zone is under heavy compression -- and also, preferably, not to adhere to the now-cured rubber, when the time comes to dismantle the splicer. The left and right filler-strips 52L,R are chosen as to their thicknesses on the basis of squeezing (compressing) the width of the belt tightly between the filler-strips 52. The left and right filler-strips 52L,R abut against the left and right edge-irons 49L,R, and the edge-irons in turn abut against the middle-facing-abutment surfaces 63L,R of the left and right grooves 61L,R. Thus, the squeeze-force exerted on the width of the belt is reacted directly within the material of the below-heater-platen 27B.

Upon assembling the belt-splicer 20 in readiness for a splicing event, the two belt-ends 29A,B are laid upon the upward-facing-surface 58 of the below heater-platen 27B (Fig.8). The left and right grooves 61L,61R lie just outside the side-edges 56 of the belt 23, and the edge-irons 49 and the filler-strips 52 are assembled into their places.

It will be understood that, because the edge-irons 49 reside in the grooves 61 formed in the material of the below-heater-platen, nothing else is required, in order to react the lateral-squeeze-force that is applied to the side-edges 56 of the belt. This may be contrasted with prior-art configurations of edge-irons, where, typically, further components are required in order to transmit the lateral squeeze-force to some other part of the structure of the belt-splicer. The present design enables the lateral-squeeze-force to be self-contained within the below heater-platen 27B.

The edge-irons 49 and the filler-strips 52 having been put in place, now the above-heater-platen 27A and the rest of the components of the splicer 20 can be assembled. Once the above-crossbeam 21A is assembled, and the tension-links 32 are in place and engaged, the operators make the splicer ready for the splicing event by coupling up the required services (electricity, water, etc).

In Figs.6,7,9, a corresponding above-groove 65L has been formed upwards into the downward-facing-undersurface 59 of the above-heater-platen 27A. The outward-facing surface 51 of the edge-iron 49 again abuts against the middle facing-abutment-surface 67 of the above-groove 65.

Fig.10 shows a variant, in which the downward-facing undersurface 59 of the above-heater-platen 27A is plain, i.e has no groove. Now, the lateral-squeeze force on the side-edges 56 of the width of the belt is reacted only within the below-heater-platen 27B.

The absence of the engagement of the above-heater-platen 27A with the edge-iron can be a disadvantage. In the splicer as described herein, the crossbeams 21 are prevented from separating, when the belt 23 is under compression, by the tension-links 32. However, the tension-links 32 do not prevent the above-crossbeam 21A from being able to move laterally, relative to the below-crossbeam 21B, and (small) lateral movements can take place. But when the edge-irons 49 engage their grooves 61,65 in both the below-heater platen 27B and the above-heater-platen 27A, such double-engagement constrains the below-heater-platen 27B and the above-heater-platen 27A against lateral movement relative to each other, and does so very securely.

On the other hand, there is often little tendency towards lateral relative movement of the crossbeams 21, and the (simple) arrangement of Fig.10 then would be preferred.

When greater security against relative lateral movement of the crossbeams is required, such can be provided e.g as in Figs.11A,11B. (Fig.11B shows the above-heater-platen 27A about to be lowered onto the belt 23.)

It has been described that the structure that is in contact with the underside of the belt is the below-heater-platen. However, from the standpoint of providing the mentioned self-contained reaction to the lateral belt-squeezing force, the function of the platen may be other than that of heater, or may include other functions besides that of heater (again, the present heater-platens also include facility for power cooling). Thus, the below-heater-platen may be referred to, generally, as the below-belt-contacting-platen, or simply as the below-platen, rather than the below-heater-platen. The important thing, for present purposes, is that the below-belt-contacting-platen should be provided with left and right middle-facing abutment-surfaces, and that the left and right edge-irons can engage those surfaces in order to react the lateral belt-squeeze forces. The following also should be mentioned. It is considerably more convenient to react the belt-squeeze forces within the below-platen, given that the edge-irons and associated components have to be assembled and configured on-site, i.e at the belt. It is more convenient to place the edge-irons and components on the over surface of the below-platen, than it would be to do the same thing upwards to the undersurface of the above-platen. However, apart from that difference in convenience, the edge-irons and components can, if the designers so wish, provide the contained-within-the-platen reaction to the belt squeeze forces in the above-platen.

Sometimes, the material of the upwards-facing surface of the below-belt contacting-platen does not itself make direct touching contact with the belt. For example, sometimes a (thin) sheet of release material is interposed between the platen and the belt, to act as an aid to separating the block from the belt, after heat treatment. The belt-contacting-platen may be defined as follows. For present purposes, the belt-contacting-platen is the nearest block of metal to the belt (above and below) that is at least 3mm thick overall (vertically). Thus, the thin sheet of release material is not itself the belt-contacting-platen.

As mentioned, the middle-facing-abutment-surface 63 of the groove 61 is integral with the material of the below-platen. In general, the middle-facing abutment-surface 63 is defined as being integral with the platen when the middle facing-abutment-surface is either formed monolithically with the platen, from one common piece of material (metal), or, if formed separately, are fixed together so firmly and rigidly as to be functionally and operationally equivalent to having been formed from one common piece of material.

The platen can be manufactured as, for example, an aluminum extrusion for the main length, and then aluminum end-caps, e.g machined from solid, are affixed to the ends of the extrusion. In that case, the middle-facing-abutment surfaces 63 can be provided on the end-caps, without the need to machine (or otherwise create) the grooves into the extrusion.

The belt 23 being horizontal, preferably the left and right middle-facing abutment-surfaces 63 that are formed in the below-platen 27B preferably are vertical -- and likewise the outward-facing surfaces 51 of the edge-irons 49.

The edge-irons 49 rest on the upward-facing-surface 58 of the below-platen 27B, and (as with edge-irons generally) the upwards-facing surface of the edge irons must be well clear of the downward-facing surface of the above-belt contacting-platen. The clearance should be sufficient that, when the full compression is being applied, the edge-iron does not come near to holding the above- and below-belt-contacting-platens apart. The compression forces should be applied to the belt, not to the edge-irons. A vertical clearance of a millimetre of two is typical.

In Fig.8, the axial length (measured in the direction of travel of the belt) of the splice-zone is contained within the axial length of the splicer. But Fig.8 is not representational: typically, several splicers are arranged side-by-side, to cover the full axial-length of the splice-zone. When several splicers are present, side by side, it can be advantageous to use one single long left edge-iron (and one single long right edge-iron), rather than to use separate edge-irons for each splicer. On the other hand, designers might prefer to arrange for each splicer to be self contained, each as a separate structure.

As mentioned, the present invention is concerned with the manner in which the lateral-squeeze-force that is applied to the side-edges 56 of the belt 23 is to be reacted -- and with the preference that the reaction should done internally, i.e. the reaction should be self-contained within the splicer, and preferably within the below-platen. Another example of a way of enabling the reaction to be internal within the splicer will now be described. Here, the outward-facing surface of the edge-iron is reacted, not against a middle-facing surface actually within the below platen (for example, herein, the surface numbered 63) but against a middle-facing surface of the tension-link 32. It might be considered that the tension link, as a structure, is not at all suitable to serve to resist a lateral force, in the plane of the belt, being a force that urges the tension-link 32 to buckle outwards about its aperture-pins 38. However, in the splicer as illustrated, there is very little tendency for the tension-links 32 to buckle (outwards) when the belt is subjected to heavy squeezing, and the liquid rubber in the splice-zone is being urged to extrude out of the zone. The tension-links do not buckle outwards because the tendency of the liquid rubber to extrude out of the splice-zone does not start to occur until the belt is under heavy compression -- by which time the tension-links are under correspondingly heavy tension. The heavy tension in the tension-links keeps the tension-links stable, and resistive to the pressures and forces arising from the tendency of the liquid rubber to extrude out of the splice-zone. In short, the tendency of the tension-links to buckle outwards under a lateral load is negated by the fact that the lateral load does not start to develop until a heavy tension has been established in the tension-links.

Some of the components and features in the drawings have been given numerals with letter suffixes, which indicate left, right, etc versions of the components. The numeral without the suffix has been used herein to indicate the components generically or collectively.

Terms of orientation (e.g "left/right" and the like) when used herein are intended to be construed as follows. The terms being applied to a device, that device is distinguished by the terms of orientation only if there is not one single orientation into which the device, or an image (including a mirror image) of the device, could be placed, in which the terms could be applied consistently.

Terms used herein that define respective theoretical constructs are intended to be construed according to the purposive construction.

The expression "can be", as used herein, should not be construed as "may be" nor as "might be", but rather should be construed strictly as "is able to be" or "has the capability to be".

Where, in a particular one of the accompanying claims, the word "left" is mentioned but not the word "right", that claim may be construed as if the word "left" had been consistently replaced by the word "right".

The apparatuses and procedures shown in the accompanying drawings and described herein are examples.

The numerals mentioned herein are summarized as follows.
20 splicer
21A,B crossbeams
23 belt
23A,B belt-ends
27A,B heater-platen
32L,R tension-links
38L,R aperture-pins
49L,R edge-irons
50L,R middle-facing surface of edge iron 49
51L,R outward-facing surface of edge-iron 49
52L,R filler-strips
53L,R middle-facing surface of filler-strip 52
54L,R outward-facing surface of filler-strip 52
56L,R side-edges of the belt, in the splice-zone
58 upwards-facing-surface of the below-heater-platen 27B
59 downwards-facing-surface of the above-heater-platen 27A
61L,R below-groove in over-surface 58 of below-heater-platen 27B
63L,R middle-facing-abutment-surface of the below-groove 61
65L,R above-groove in under-surface 59 of above-heater-platen 27A
67L,R middle-facing-abutment-surface of the above-groove 65
RE: MODULAR TOOL

### Drawings

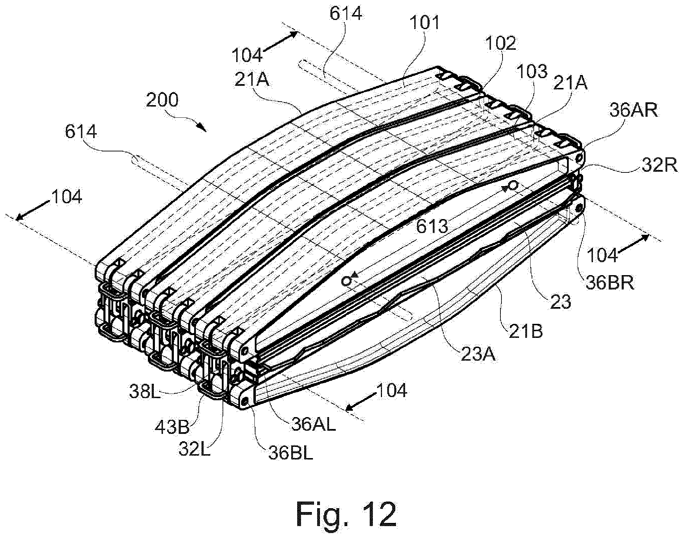

Figures 12, 13 and 14 are a perspective view, a plan view and a side elevation, respectively, of the modular clamping tool of the invention fully assembled as a plurality of individual clamping components into the tool.

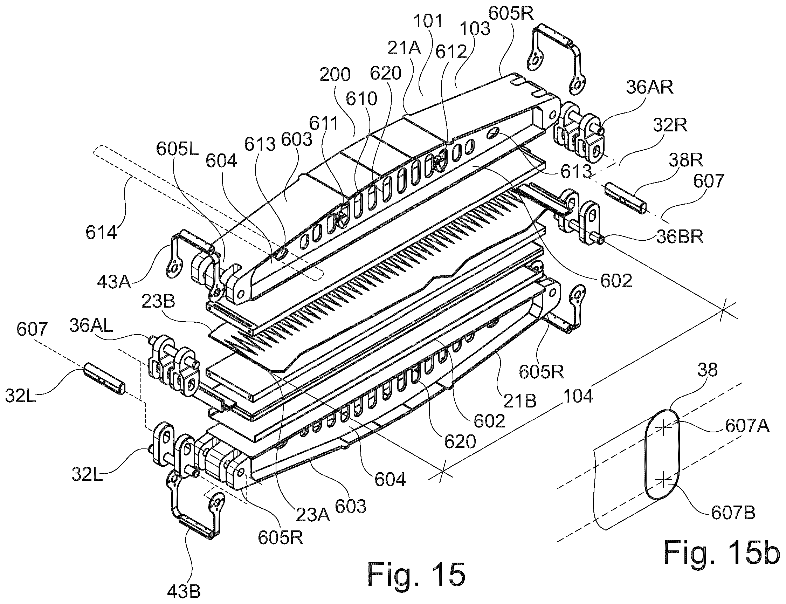

Figure 15 is an exploded pictorial view of the clamping component, separately numbered in this drawing.

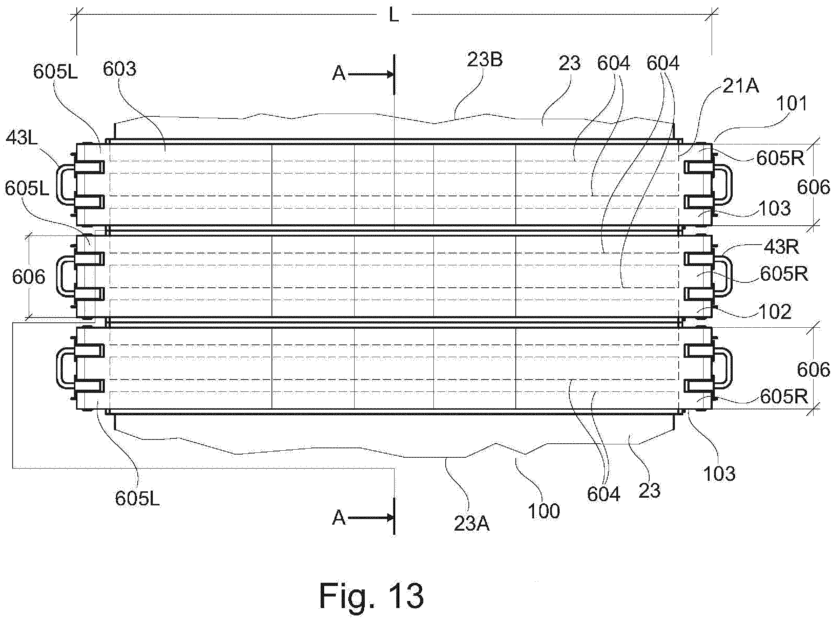

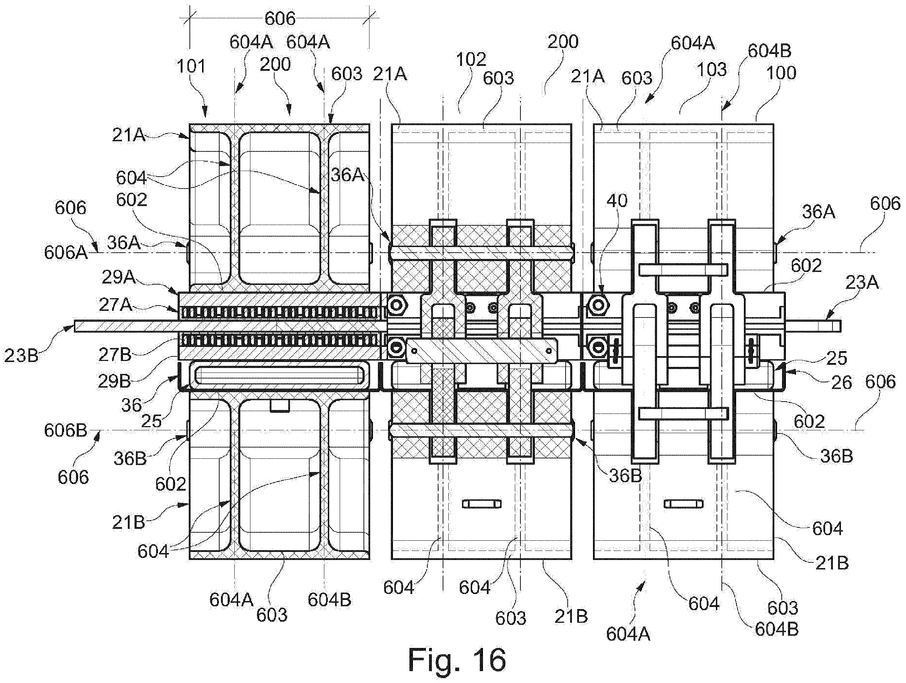

Figure 16 is a segregated end cross-sectional elevation of the clamping tool taken along stepped line A-A in Figure 13.

In one aspect of the invention as shown in Figures 12-14, the modular tool 100 comprises abutting modular clamping components 101, 012 and 103 for a 3 module component tool. For wider or narrower splicing the tool may be assembled with one or as few as a pair of abutting modular clamping components 102 and 103 or as many as 4 or more as may be required, each at least abutting the next adjacent unit.

In Figure 15 (showing clamping component 101) the upper clamping crossbeam 21A, for each of clamping components 101, 102 and 103, is shown as a highly elongated component with an aspect ratio of greater than, preferably, 4:1, a length L, a width W and a height H. A corresponding and identical highly elongated cross beam 21B is shown below belt 23 in inverted position.

When linked together with linkage components 32L,32R, including components 34A, 34B, 36A, 36B and 38 (either left of right, further designated in the drawings with an "L" or a "R" respectively in the drawings), the clamping component 101 is assembled for uniform compressive belt clamping perpendicular to both the belt surface and the cross-beam across the whole of is elongated projection on to the belt 23, comprising overlapping portions 23A and 23B, an area exceeding the nominal belt width, 104 in Figure 12.

Within each of modular components 101, 102 and 103, herein referred to collectively as cross beam clamping components 100, are upper and lower insulating layer components 29 and upper and lower heating and cooling components 27 (integrated in to a replaceable cartridge, upper 27A and lower 27B), plus at least one airbag 25 adapted to receive externally applied air or water pressure 40. Each modular component 100 has a similar orthogonal projection across the full extent 104 of the belt and within the projected area of the said elongated projection preferably perpendicular to the belt 23 and is adapted to be closely adjacent each other, and preferably abutting, when assembled for use. Preferably there is only one air bag 25 either situated bottom or top of the belt 23 but there are occasions where 2 airbags, top and bottom are preferred. Also preferably, insulating layer 29 lies between the heating and cooling layers 27 and the air bag position as shown on component 101 in Figure 16. The air bag 25 is preferably an inflatable structure restrained within a open rectangular shell 26.

Each of cross beam clamping components 21A and 21B for each of modules 101, 102 and 103 (Figures 12 through 16) is formed by a thin walled casting of light weight material such as aluminum or, alternatively, welded from sheet stock, or a combination of casting and welding. Each modular component 101, 102 and 103, in section as shown in Figure 16, includes a flat platen surface 602, adapted to act upon the heating and cooling cartridges 27A and 27B respectively across is full projection onto and preferably perpendicular to the belt, at least, plus an outer tension surface 603. Platen surface 602 and tension surface 603 are separated by at least 2 vertical flange elements 604 (also preferably perpendicular to the belt) to comprise a box-beam and I-beam combination across at least the full projection of the cross-beam 100 on to the belt 23.

Box beam vertical elements 604 are both aligned, as at 604A and 604B in Figure 16, with a corresponding pair of tension links 32L and 32R, each including upper and lower links 34 joined together by pins 38 for tension perpendicular to platen surface 602 without twist and with no substantial bending moment other than transverse to the length L and parallel to the width of the belt.

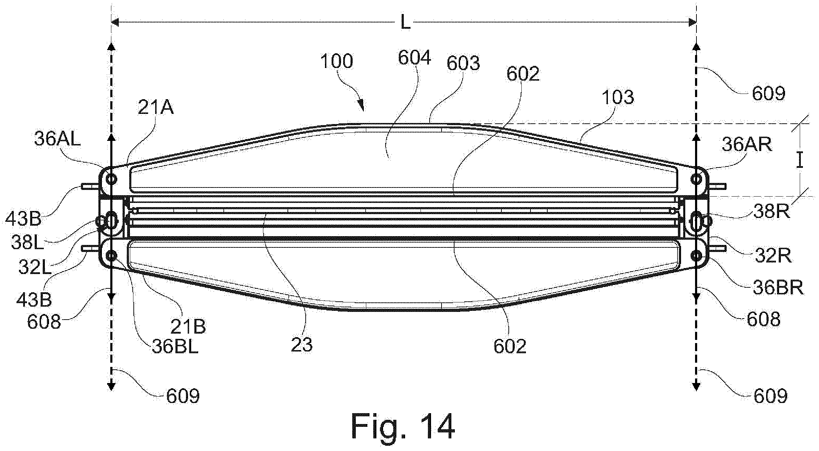

As shown in Figure 14 the upper surface 603 is formed as, preferably, an arch or double taped surface, to accommodate the bending forces generated during the long periods of processing required for the splice which occur between assembly of the modular tool through vulcanization to cooling and dis-assembly and additionally assist in resisting any residual twisting about length L.

In another alternative of the invention a heating and cooling (forced) cartridge 27 is provided adapted to lie adjacent to and across the full belt splice alone or as a pair either above or below the belt splice. The cartridge is highly elongated in relation to the belt splice with aspect ratios higher than 4:1 and corresponds in projected belt area to an individual pair of orthogonally aligned clamping components.

The 2-layer embodiment of the cartridge as depicted in Figures 12 to 17 and in exploded view in Figure 15 is provided with a planar exterior surface on 2 sides which are adapted to interact with and perpendicular to the belt being spliced on the one side (the belt surface 702) and the source of pressure on the other (the pressure surface 703) extending over at least the full nominal width of the splice. These surfaces are preferably both flat and parallel. The cartridge is designed to be used in and with a plurality of closely abutting identical cartridges to form a belt splice platen-type array which may be as few as 2 and as many as 6 or more contiguous cartridges in operation.

Most preferably, each of modular components 100 includes a monolithic structure at each end, as at 605L and 605R in Figures 13 and 15, which extends across, and most preferably completely across, the full width 606 of each of the modular components 100. The monolithic structures 605 are preferably engineered to spread loading between the surfaces 602, 603 and flanges 604 and pins 36A and 36B on each of the left and right ends of each modular component 100 as shown in Figures 7 and 16.

As shown in Figures 3, 15 and 16 each of cross-beams 21A (upper) and 21B (lower) is rotatably pinned to a matched pair of upper links 41A and a matched pair of lower links 41B respectively for rotation solely about axes 606A and 606B respectively. Axes 606 lie in a plane parallel to the surface of belt 23, are parallel to each other and perpendicular to the long dimension L of a respective modular component 100. Links 41A and 41B, as shown in Figure 3, are joined together as by pin 38 having its long axis 607 parallel to each of axes 606. In the case of a non-circular pin 38, such as shown in Figures 4A and 5A axis 607 of pin 38, may be a pair of parallel axes of rotation 607A and 607B as in Figure 15B. Thus, expansion of air bag 25, preferably, causes separation of cross-beams 21 and causes the tension in links 41A and 41B to be increased from a low value, or zero, static tension vector 608 resulting (see Figure 14) from assembly to a high value tension vector 609 for splicing which is most preferably fully perpendicular to both belt 23 and component surfaces 602 during the full operational cycle. Any misalignment of the this tension force 609 and any bending or twisting moment is transferred between the upper and lower components 21A and 21B in a manner fully orthogonal to belt 23 and is restrained to bend components 21A and 21B solely about an axis parallel to and along the operational length of belt 23 without any twisting moment in the box or I-beam combination of surfaces, or, at least, to reduce same substantially. Thus, each modular component 100 is restrained with its height H to remain perpendicular to belt 23. Thus components 101, 102 and 103 are parallel to each other and in close proximity to each other at all times as shown in the drawings. As assembled interconnection between immediately adjacent components 101, 102 and 103 is provided by the belt 23 itself.

Modular component 200 may be fitted with a safety restraint bar or bars 614 which are adapted to be passed through passages 613 in flanges 604 in respective components 101, 102 and 103. For ease of use, flanges 604 may be fitted with clips 611 to maintain the bar 614 together with a cross-beam 21.

Further, for ease of manufacture and reduced operational weight flanges 604 may be relieved as at 610 in Figure 15.

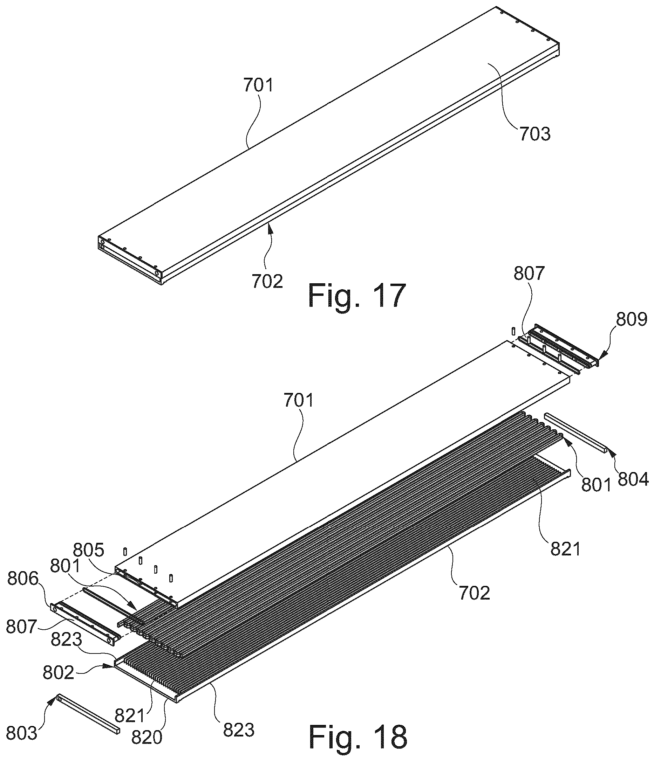

Figure 17 is a pictorial view of the modular thermal cartridge.

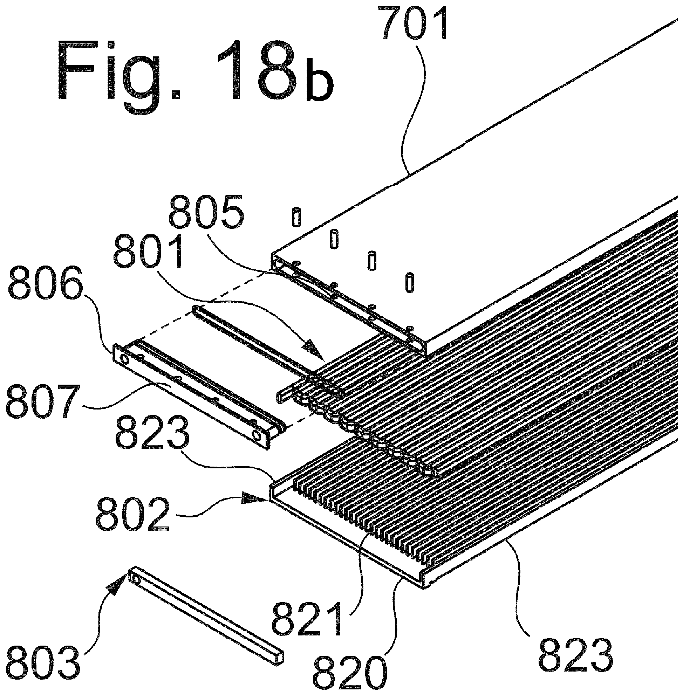

Figure 18 is an exploded pictorial view of the cartridge of Figure 17. Figure 18b is a lose up of a portion of Figure 18.

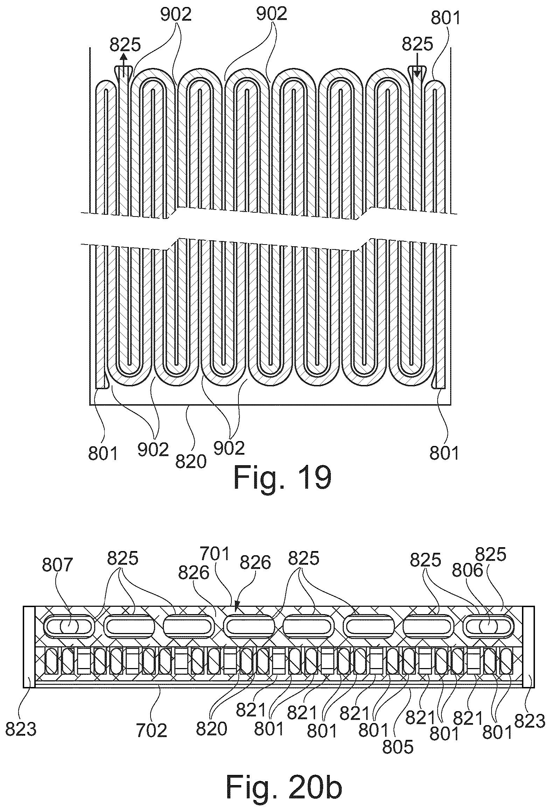

Figure 19 is a plan view of intercallated embodiment.

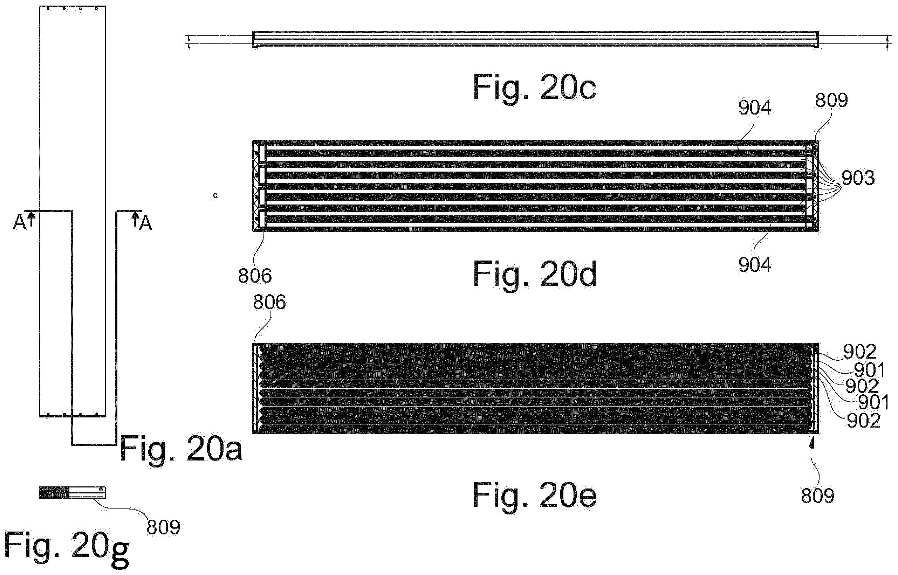

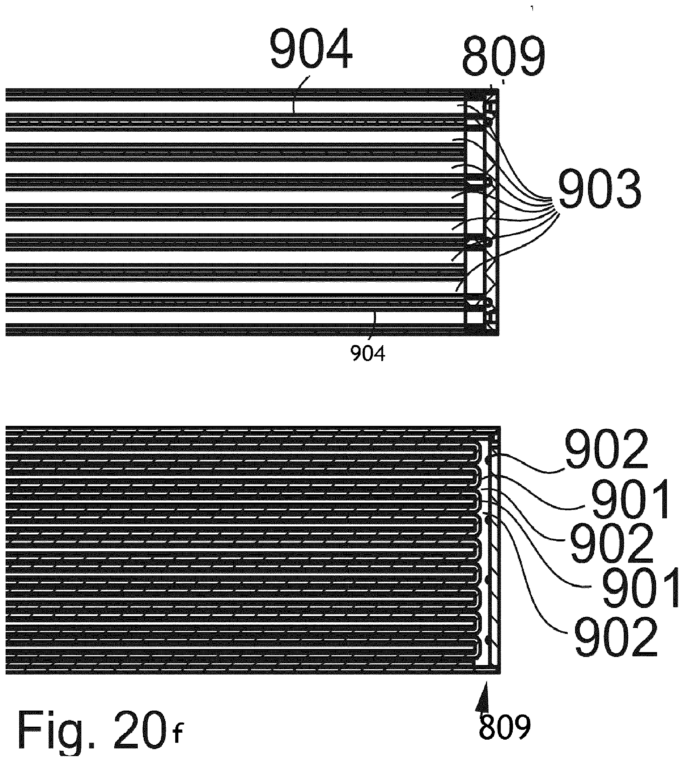

Figure 20a through e are top plan, partial end section, side and selected cross-sectional views of a further embodiment of the densely packed heating and cooling array of the invention. Figure 20f is a close up of a portion of Figure 20.

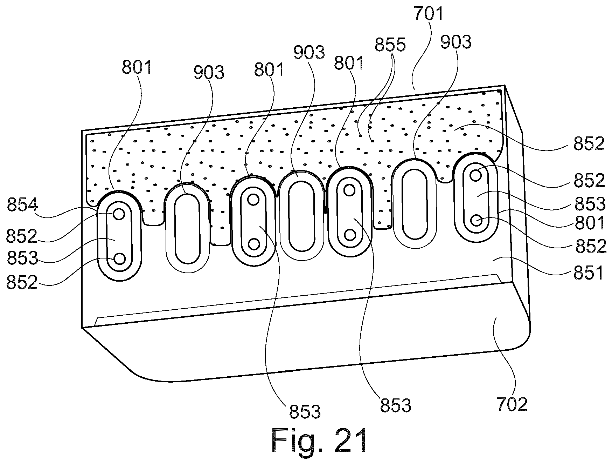

Figure 21 is a end cross-section of an another preferred embodiment.

The cartridge 701 as shown in Figure 17 with a next-to-belt surface 702 and an outer surface 703. Cartridge 701 is preferably formed with 3 distinct layers as shown in Figure 18 whole long dimension L between is shell ends and width W match those of a modular component belt splicer as shown herein.

The belt surface 702 of the cartridge 701 is provided with a base tray 802 including a heat transmissive layer 820 across its full extent which may be bent upwards at its lateral extremities form outside edges 823. The transmissive layer is preferably no more than a few mm thick.

Formed primarily from an aluminum extrusion the transmissive layer 820 is preferably formed with a plurality of upstanding, preferably integral, internal fins or supports 821 in a closely packed array 822 which, together, form the heating layer of the cartridge. Outside edges 823 provide the inside extent of array 822. Fins 821 are minimally thin and may be as little as 1 mm in breadth and may be tapered to ensure both heat conductivity and structural support across the fin structure 822 to resist and preferably isolate compressive forces delivered by the cross-beams in a splicing operation.

Inter-fin spacings are occupied, and preferably fully occupied, by a continuous electrical heating cable 801 in heat transmissive contact with the fin supports 821. Cable 821 lies in a serpentine pattern substantially throughout at least the projected area of the cartridge onto the belt splice as shown in Figures 18 on. Adjustments to heating capacity and uniformity may be made by changing the fin spacing, engaging the serpentine wire in alternate fin lines as required (see Figure 18 and 19) or changing the wire or adjusting its heating capacity.

The fin supports 821 extend internally at least as far as the extent of the heating cable 801 so as to bear the load, and preferably substantially all of the load, associated with process pressure throughout the whole of the heating and cooling process, plus assembly and dis-assembly operations, including variable bending and stresses associated the thin walled modular componentry.

Most preferably, the serpentine heating cable 801 is a temperature and heat wattage controlled electrical cable flattened on 2 sides to form a race track configuration as shown in Figure 20b.

The cable 801 is oriented vertically from both the belt splice 23 and the heat transmissive surfaces 820 and fully contacts that surface and each of the adjacent fin supports along its circular end and along its respective flat sides. Any spacings between the wire boundary and the fins or heat conductive surfaces may be filled on manufacture with a suitable heat structurally supporting conductive material as in Figures 19, 20 and 21.

Preferably cable 801 is temperature reactive, with or without embedded temperature measurement devices, and interacts with minimally thin transmissive layer 820 for uniform delivery of process heat across the splice in conjunction with cable side or side wall 823 thermal conductivity and fins 821.

In an alternative embodiment, the electrical cable 801 does not fully occupy the fin support array 821. Fin support array 821 may be sized to provide uniform heating and controlled process temperatures through adjacent fin supports and the heat transmissive layer 802 but with wire 801 not extending beyond the height of the fin supports 821. Corresponding adjustment of the next layer out is made so as not to pressure the conductive wire 801 during processing.

A forced cooling layer 805, Figures 18 and 20, preferably lies vertically adjacent the heating layer in thermally transmissive contact with the fin array 821 so as to transmit most or all of the process pressure through to the fin array 821 and not the heating cable 801.

Most preferably as shown in Figures 20, the cartridge 701 includes an elongated outer container 805 adapted to contain both: the serpentine heating cable 801 shown in Figure 18, the support fins 821, and heat transmissive filler material 826 adjacent belt surface , and, a one or a plurality of serpentine cooling tubes 825 (Figure 20a) embedded in support material 826 arranged so as to provide vertical structural support across the cartridge 701 and resistance-free flow through of cooling fluid across the full surface of the belt 23 from manifold end cap 806 to manifold end cap 809.

External sources of process pressure, air or water, may be connected to cooling tubes 825 and 805 through manifold connections 806 and 809 at either shell end of the thermal cartridge and thence to supply with or without an intervening manifold in the event that a non-serpentine cooling tube is used.

The cartridge 701 includes end spacers (not shown) which close the tray 802 at each shell end so as to provide additional vertical structural support and spacing for the cartridge 701 against process pressures.

The interior of the preferred embodiment of Figures 20 is shown more closely in the exploded view of Figure 20b.

In Figure 19 the serpentine heating wire 801 is configured to pass down and back between every pair of fins 902 in the heating layer as a single wire or in a horizontal array of parallel heating wires. Cooling tubes 903 may be intercalated with heating wire 801 and fins 902 in a single layer as in Figure 19. Preferably, cooling tubes 901 lie within shell 805 and lie vertically outward from the heating array as shown in Figures 20. Cooling tubes 903 preferably lie above wire 901 so that vertical alignment of the fins with the supports 904 between tubes 903 ensures maximum structural integrity against process pressures and bending.

Most preferably, the cartridge also optionally includes a substantially rigid load bearing insulating third layer (not shown) either partially integral with or completely supported upon and in contact with at least the cooling layer so as to transmit process pressures from the cross-beam uniformly through to the cooling layer and then the fin support array while insulating the heating/cooling elements from non-process heating losses.

Preferably the insulating layer is formed as a single amorphous layer prefabricated and assembled or poured in place, most preferably including reinforcing fibres and means to lighten the layer.

As can be seen the cartridge 701 may be readily and inexpensively fabricated on a component basis while remaining light in weight and optimal in heating and cooling delivery. Easily manipulated in the field, the cartridge 701 assists in approaching a process fail safe condition by providing for ready and rapid replacement of a single cartridge in the most extreme conditions of storage, installation, process use and decommissioning.

At A in Figure 16 shows co-planar close abutment between adjacent cartridges in components 101 and102. Alternatively, this abutment A may include a step or tongue and groove mating.

Most preferably, the cartridge is formed as shown in Figures 20 wherein the heating and cooling layers are not both inter-callated with the fin supports so as to reduce thermal capacity while maintaining optimal process heat and pressure without deformation through rapid heating and cooling cycles while processing.

Figures 20a and 20e show a top plan view of this embodiment, a partial end section, a side elevation, and an upper and lower section B-B and C-C.

In Figure 11a the cartridge is shown in an exploded view with a finned base plate 1. Expanded views of Figure 11a are shown in Figures 11b and 11c. Flattened heating cable Z is formed as a serpentine shape and inter-callated with the fins 5 so as to occupy alternate pairs of fin spacings 4, that is 3 fins per wire length, so as to lie in a single plane leaving unoccupied channels 6. Unoccupied channels 6 are preferably also in alternating pairs, 3 fins per channel. Unoccupied channels 6 may form a cooling structure by closure across the top of the fins 5 for the full width and breadth of the array. Cooling by externally applied air or water occurs by passage of the fluid along the length of the unoccupied channels in contact with vertical surfaces of 3 fins per passage. A manifold would be included at each end of the array of passages to supply and exhaust the cooling fluid. Alternately, the unoccupied channels may include a serpentine cooling tube 7 as shown in Figures 12 and 13 for fluid flow A-A. The flattened sides of cooling tube 2 are in thermally transmissive contact with respective fins, preferably on both sides. A closely packed single plane heating and cooling array is provided and then closed into a single thermal unit by insulating cover plate 3. Most preferably, each length of each of the cable and the cooling tube are in surface to surface contact with fins on both flattened sides.

Figure 13 shows a further expanded plan view of the heating/cooling array of Figure 12 in its cooling tube embodiment. Fins 5 occupy all spacings between back and forth runs of each serpentine of each of the heating cable.

Figure 21 shows a partial cross-section of a still further embodiment of the cartridge 701 of the invention. Belt surface 702 is not integrally formed with heat transmissive fins. Alternatively, heat transmissive material 851 is in a liquid or semi-liquid phase and poured into place, optionally between edges 823. While material 851 is still semi-liquid elongated heating cables 801 are embedded wholly or completely in the material 851 in a parallel array or as a serpentine. Continuing while material 851 is still semi-liquid cooling tubes 903 are embedded in the material 851 either directly adjacent cables 801 or vertically above said cables as in Figures 19 and 20 and allowed to harden into a structural support between the belt surface and surface 701. Once set compressive forces provided during a belt splice by pass the thermal element structure as they are carried by the support structure without bending or twisting. Cartridge 701 is then completed with structural heat insulating material 852 which may be poured into place either before or after material 851 has set or hardened.

Cable 801 in Figure 21 is shown as a pair of electrical conductors 852 separated by a thermally adjustable electrical insulator 853 with the whole surrounded by electrical insulation 854.

Structural material 852 may contain lightening and-reinforcing elements 855.

Once hardened, materials 851 and 852 provide the supporting fin structural array of the invention providing full thermal conductivity with the belt surface and full insulation with the clamping components.

In an alternate embodiment the cable or the cooling tube may be composed of single straight lengths spliced together at each end.

The scope of the patent protection sought herein is defined by the accompanying claims. The apparatuses and procedures shown in the accompanying drawings and described herein are examples.

## Claims

1. A belt splicer (20), which includes an above crossbeam (21A) and a below crossbeam (21B), arranged to span across the width of a belt (23) to be spliced, the crossbeams (21A, 21B) being positioned one above, and the other below, the splice-zone of the belt (23), wherein:
[a] an above left beam-end of the above crossbeam (21A) and a below left beam-end of the below crossbeam (21B) extend leftwards beyond the left side edge of the belt (23);
[b] an above right beam-end of the above crossbeam (21A) and a below right beam-end of the below crossbeam (21B) extend rightwards beyond the right side edge of the belt (23);
[c] a left tension-link (32L) connects the above left beam-end of the above crossbeam (21A) to the below left beam-end of the below crossbeam (21B);
[d] a right tension-link (32R) connects the above right beam-end of the above crossbeam (21A) to the below right beam-end of the below crossbeam (21B);
[e] the left and right tension-links (32l, 32R) are engineered to prevent separation of the respective beam-ends of the above and below crossbeams (21A, 21B), in the up/down direction, against heavy forces urging the crossbeams (21A, 21B) apart during operation of the splicer (20);
[f] the left tension-link (32L) includes an above left tension-link-element (34AL), which is pinned to the above left beam-end of the above crossbeam (21A); the right tension-link (32R) includes an above right tension-link-element (34A), which is pinned to the above right beam-end of the above crossbeam (21A)
[g] the left tension-link (32L) includes also a below left tension-link-element (34BL), which is pinned to the below left beam-end of the below crossbeam (21B); the right tension-link (32R) includes also a below right tension-link-element (34B), which is pinned to the below right beam-end of the below crossbeam (21B),
[h] the above left tension-link-element (34AL) is formed with an above left aperture, and the below left tension-link-element (34BL) is formed with a below left aperture; the above right tension-link-element (34A) is formed with an above right aperture, and the below right tension-link-element (23B) is formed with a below right aperture
[i] the tension-links (32L, 32R) are arranged for aperture-alignment of the tension link-elements (34), in which:
• the above left tension-link-element and the below left tension-link element so engage and align with each other that the above left aperture overlies the below left aperture;
• a left aperture-pin can be inserted through, and can reside in, both left apertures;
• when so inserted through both left apertures, the left aperture-pin is subjected to, and supports, the heavy forces, and thereby prevents the left beam ends of the cross beams from separating in the up/down direction; and
• when the left aperture-pin is withdrawn from the left apertures, the left tension-link-elements are thereby disconnected from each other, whereby the left beam-ends of the crossbeams are no longer connected and the crossbeams can be separated;
[j] the tension-links (32L, 32R) are arranged for aperture-alignment of the tension link-elements, in which:
• the above right tension-link-element and the below right tension-link element so engage and align with each other that the above right aperture overlies the below right aperture;
• a right aperture-pin can be inserted through, and can reside in, both right apertures;
• when so inserted through both right apertures, the right aperture-pin is subjected to, and supports, the heavy forces, and thereby prevents the right beam ends of the cross beams from separating in the up/down direction; and
• when the right aperture-pin is withdrawn from the left apertures, the right tension-link-elements are thereby disconnected from each other, whereby the right beam-ends of the crossbeams are no longer connected and the crossbeams can be separated;
[k] the operational distance apart of the left and right beam-ends of the crossbeams is adjustable, in that:
• the splicer includes two aperture-pins for the left link elements and two equal aperture-pins for the right link elements, termed pin-A having pin-profile-A, and pin-B having pin-profile-B;
• the pin-profile-A is such that, the apertures being in aperture alignment, the pin-A can pass through the left apertures;
• the pin-profile-B is such that, the apertures being in aperture alignment, the pin-B can pass through the left apertures; **characterized in that**
[l] the pin-profile-A is different from the pin-profile-B as to their heights in the up/down direction, **in that**:
(i) when the pin-A is residing in the left and right apertures and is supporting the heavy forces, the distance apart of the beam-ends then is distance-A;
(ii) when the pin-B is residing in the left and right apertures and is supporting the heavy forces, the distance apart of the left beam-ends then is distance-B; and
(iii) the distance-A is not equal to the distance-B.

2. A belt splicer as claimed in claim 1, wherein the splicer includes a powered thermal-platen, having the capability, as a structure, for sequentially heating and cooling the splice zone of the belt during different phases of a splicing event.

3. A belt splicer as claimed in claim 1, wherein:
• the pin-profile-A is such that, the two apertures being in aperture-alignment, pin-A can pass through and reside in both apertures;
• the pin-profile-B is such that, the two apertures being in aperture-alignment, pin-B can pass through and reside in both apertures;
• but the pin-A cannot reside in the apertures at the same time as the pin-B.

4. A belt splicer as claimed in claim 1, wherein the above and below apertures are formed as slotted holes.

5. A belt splicer as claimed in claim 1, wherein:
• the splicer includes a left-kit and a right kit of aperture-pins;
• the left-kit and the right kit includes pin-A and pin-B, and at least one further aperture-pin, where the aperture-pins in the left-kit and the right kit differ from each other, as to their profile dimensions in the up/down direction;
• the profile dimensions in the up/down direction of the pins differ in a series of steps, at such convenient intervals as to enable the distance between the above left and right beam-end and the below left and right beam-end to be adjusted by exchanging one pin of the kit for another.

6. A belt splicer as claimed in claim 1, wherein:
• the above left tension-link-element comprises two clevises, having respective pairs of spaced arms, and the above left apertures are formed as through-holes in the arms;
• the below left tension-link-element comprises two drawbars, which engage between the arms of the clevises, and the below left apertures are formed as respective through-holes in the drawbars;
• the two clevises are structurally integrated, so that both are constrained to move together when the above left tension-link-element undergoes pivoting movement;
• the two drawbars are structurally integrated, so that both are constrained to move together when the below left tension-link-element undergoes pivoting movement;
• an above left handle is provided on the above left tension-link-element to enable manual control of the pivoting movement thereof;
• a below left handle is provided on the below left tension-link-element to enable manual control of the pivoting movement thereof;
• the aperture-pins are now termed clevis-pins.

7. Belt splicing arrangement, which includes a belt and a belt splicer according to any preceding claim, an above crossbeam and a below crossbeam, arranged to span across the width of a belt to be spliced, wherein:
• the crossbeams are positioned above and below a splice-zone of the belt;
• a left tension-link connects a left end of the above crossbeam to a left end of the below crossbeam;
• a right tension-link connects a right end of the above crossbeam to a right end of the below crossbeam;
• the splicer includes an operable inflator, which is so configured as to be effective, when operated, to subject the splice-zone of the belt to heavy compression pressure;
• the splicer includes a below-platen having an over-surface which, during a splicing event, resides underneath the belt;
• the splicer includes an above-platen having an under-surface which, during a splicing event, resides on top of the belt;
• the splicer includes left and right edge-irons;
• the left edge-iron is formed with a left middle-facing sealing surface;
• the right edge-iron is formed with a right middle-facing sealing surface;
• the splicer is so configured that, during splicing, the left and right sealing surfaces press inwards against the left and right side-edges of the belt, in the splice zone, thereby exerting a laterally-inwards-directed sealing-pressure against the side-edges of the belt;
• the lateral sealing pressure is enough to prevent, or substantially inhibit, lateral extrusion and leakage of liquids out of the splice-zone, during splicing, being such liquids as arise within the splice-zone during a splicing event;
• the left edge-iron is formed with a left outwards-facing abutment-surface;
• the right edge-iron is formed with a right outwards-facing abutment surface;
• the below platen is formed with left and right middle-facing abutment surfaces;
• the outwards reaction of the left edge-iron due to the inwards-directed sealing-pressure is reacted by abutment engagement of the left outwards-facing abutment-surface of the left edge-iron against the left middle-facing abutment surface of the below-platen;
• the outwards reaction of the right edge-iron due to the inwards-directed sealing-pressure is reacted by abutment engagement of the right outwards-facing abutment-surface of the right edge-iron against the right middle-facing abutment surface of the below-platen.
• whereby the forces causing the inwards sealing pressure, and the reactions to those forces, are all contained within the below-platen.

8. A belt splicing arrangement as claimed in claim 7, wherein:
[2] the below-platen is a powered thermal-platen, having the capability to be operated to sequentially heat and cool the splice-zone, from below, during different phases of a splicing event;
[3] the below-platen is another powered thermal-platen, having the capability to be operated to sequentially heat and cool the splice-zone, from above, during different phases of a splicing event.

9. A belt splicing arrangement as claimed in claim 7, wherein:
[2] the left middle-facing abutment-surface is an integral component of the below-platen, in that:
[3] (a) the left middle-facing abutment-surface is formed monolithically with the body of the below-platen; or
[4] (b) the left middle-facing abutment-surface having been formed separately from the body, the abutment-surface and the body are fixed together so firmly as to be functionally and operationally equivalent to having been formed monolithically.

10. A belt splicing arrangement as claimed in claim 7, wherein:
• a left extension of the below-platen extends outwards beyond the left sideedge of the belt;
• a right extension of the below-platen extends outwards beyond the right side-edge of the belt;
• the left middle-facing abutment-surface is located in the left-extension of the below-platen;
• the right middle-facing abutment-surface is located in the right-extension of the below-platen.

11. A belt splicing arrangement as claimed in claim 10, wherein:
• the left extension is an integral component of the below-platen, in that:
(a) the left extension is formed monolithically with the body of the belowplaten; or
(b) the left extension having been formed separately from the body, the leftextension and the body are fixed together so firmly as to be functionally and operationally equivalent to having been formed monolithically.

12. A belt splicing arrangement as claimed in claim 7, wherein:
• the left edge-iron includes two components, being a left hard-metal strip and a left filler-strip;
• the material of the left filler-strip is softer, and more compliant, than the hard-metal;
• the left middle-facing sealing-surface is a surface of the left filler-strip;
• the left outwards-facing abutment-surface is a surface of the left hard metal strip;
• the components are so dimensioned and configured, with respect to the belt, that the left filler-strip is squeezed between the left side-edge of the belt and left hard-metal strip, during operation of the splicer.

13. A belt splicing arragnement as claimed in claim 12, wherein:
• the physical structure of the edge-irons in relation to the other components of the splicer, is such as to ensure that:
• under heavy compression on the splice-zone of the belt during operation of the splicer, no portion of the compressive pressure is supported by and transmitted through:
(a) the left hard-metal strip of the left edge-iron; nor
(b) the right hard-metal strip of the right edge-iron.

14. A belt splicing arrangement as claimed in claim 8, wherein:
• the left middle-facing abutment-surface is a middle-facing sidewall of a left groove;
• the left groove has been formed directly down from the over-surface of the below-platen into the material of the below-platen.

15. A belt splicing arrangement as claimed in claim 8 comprising one or more unconnected modular clamping components wherein each modular clamping component includes:
• an upper and a lower elongated cross-beam with a length L, a width W and a height H, each cross-beam adapted:
• for its length L to extend between a left beam end and a right beam end fully across the long dimension of a belt to be spliced, and,
• said beam ends protruding beyond corresponding left and right belt edges on each side of the belt, and, to provide clamping forces perpendicular to the belt to be spliced and to restrain clamping forces in bending along its respective length L
• a left and a right tension link each pivotally secured to and between respective left and right beam ends for rotation about at least a pair of parallel axes each transverse to length L and parallel to the surface of the belt and wherein said tension links are operable under tension solely by rotation about said parallel axes.

## Patentansprüche

1. Bandspleissvorrichtung (20), die einen oberen Querträger (21A) und einen unteren Querträger (21B) umfasst, die so angeordnet sind, dass sie die Breite eines zu verbindenden Bandes (23) überspannen, wobei die Querträger (21A, 21B) der eine oberhalb und der andere unterhalb eines Spleissbereiches des Bandes (23) positioniert sind, wobei:
[a] sich ein oberes linkes Trägerende des oberen Querträgers (21A) und ein unteres linkes Trägerende des unteren Querträgers (21B) nach links über die linke Seitenkante des Bandes (23) hinaus erstrecken;
[b] sich ein oberes rechtes Trägerende des oberen Querträgers (21A) und ein unteres rechtes Trägerende des unteren Querträgers (21B) nach rechts über die rechte Seitenkante des Bands (23) hinaus erstrecken;
[c] ein linker Spannverbinder (32L) verbindet das obere linke Trägerende des oberen Querträgers (21A) mit dem unteren linken Trägerende des unteren Querträgers (21B);
[d] ein rechter Spannverbinder (32R) verbindet das obere rechte Trägerende des oberen Querträgers (21A) mit dem unteren rechten Trägerende des unteren Querträgers (21B);
[e] der linke und der rechte Spannverbinder (32L, 32R) sind so ausgelegt, dass sie ein Auseinanderdriften der jeweiligen Trägerenden der oberen und unteren Querträger (21A, 21B) in Aufwärts-/Abwärtsrichtung verhindern, und zwar gegen starke Kräfte, die die Querträger (21A, 21B) während des Betriebs der Bandspleissvorrichtung (20) auseinanderzudrücken versuchen;
[f] der linke Spannverbinder (32L) umfasst ein oberes linkes Spannverbindungselement (34AL), das am oberen linken Trägerende des oberen Querträgers (21A) verstiftet ist; der rechte Spannverbinder (32R) umfasst ein oberes rechtes Spannverbindungselement (34A), das am oberen rechten Trägerende des oben genannten Querträgers (21A) verstiftet ist;
[g] Der linke Spannverbinder (32L) umfasst ausserdem ein unteres linkes Spannverbindungselement (34BL), das am unteren linken Trägerende des unteren Querträgers (21B) verstiftet ist; der rechte Spannverbinder (32R) umfasst zudem ein unteres rechtes Spannverbindungselement (34B), das am unteren rechten Trägerende des unteren Querträgers (21B) verstiftet ist,
[h] das obere linke Spannverbindungselement (34AL) ist mit einer oberen linken Öffnung versehen, und das untere linke Spannverbindungselement (34BL) ist mit einer unteren linken Öffnung versehen; das obere rechte Spannverbindungselement (34A) ist mit einer oberen rechten Öffnung versehen, und das untere rechte Spannverbindungselement (23B) ist mit einer unteren rechten Öffnung versehen
[i] die Spannverbinder (32L, 32R) sind so angeordnet, dass die Öffnungen der Spannverbindungselemente (34) zueinander ausgerichtet sind, wobei:
• das obere linke Spannverbindungselement und das untere linke Spannverbindungselement so ineinandergreifen und aufeinander ausgerichtet sind, dass die obere linke Öffnung über der unteren linken Öffnung liegt;
• ein linker Öffnungsstift durch beide linken Öffnungen eingeführt werden und in diesen verbleiben kann;
• wenn der linke Öffnungsstift auf diese Weise durch beiden linken Öffnungen eingeführt ist, wird er den grossen Kräften ausgesetzt und nimmt diese auf, wodurch er verhindert, dass sich die linken Trägerenden der Querträger in Aufwärts-/Abwärtsrichtung voneinander lösen; und
• wenn der linke Öffnungsstift aus den linken Öffnungen herausgezogen wird, werden die linken Spannverbindungselemente dadurch voneinander getrennt, wodurch die linken Trägerenden der Querträger nicht mehr verbunden sind und die Querträger voneinander getrennt werden können;
[j] die Spannverbinder (32L, 32R) sind so angeordnet, dass die Öffnungen der Spannverbindungselemente zueinander ausgerichtet sind, wobei:
• das obere rechte Spannverbindungselement und das untere rechte Spannverbindungselement so ineinandergreifen und zueinander ausgerichtet sind, dass die obere rechte Öffnung über der unteren rechten Öffnung liegt;
• ein rechter Öffnungsstift durch beide rechten Öffnungen eingeführt werden und in diesen verbleiben kann;
• wenn der rechte Öffnungsstift auf diese Weise durch beide rechten Öffnungen eingeführt ist, wird er den grossen Kräften ausgesetzt und nimmt diese auf, wodurch er verhindert, dass sich die rechten Trägerenden der Querträger in Aufwärts-/Abwärtsrichtung voneinander lösen; und
• wird der rechte Öffnungsstift aus den rechten Öffnungen herausgezogen, werden dadurch die rechten Zugverbindungselemente voneinander getrennt, wodurch die rechten Trägerenden der Querträger nicht mehr verbunden sind und die Querträger voneinander getrennt werden können;
[k] Der Betriebsabstand zwischen dem linken und dem rechten Trägerende der Querträger ist einstellbar, und zwar derart, dass:
• die Bandspleissvorrichtung zwei Öffnungsstifte für die linken Spannverbindungselemente und zwei gleichartige Öffnungsstifte für die rechten Spannverbindungselemente umfasst, die als Stift-A mit Stiftprofil-A und als Stift-B mit Stiftprofil-B bezeichnet werden;
• das Stiftprofil A so beschaffen ist, dass der Stift A, wenn die Öffnungen fluchtend sind, durch die linken Öffnungen hindurchgeführt werden kann;
• das Stiftprofil-B so beschaffen ist, dass der Stift-B bei ausgerichteten Öffnungen durch die linken Öffnungen hindurchgeführt werden kann;
**dadurch gekennzeichnet, dass**
[l] sich das Stiftprofil A vom Stiftprofil B hinsichtlich ihrer Höhen in der Aufwärts-/Abwärtsrichtung insofern unterscheidet, als:
(i) wenn sich der Stift A in den linken und rechten Öffnungen befindet und die grossen Kräfte aufnimmt, der Abstand zwischen den Trägerenden dann Abstand-A beträgt;
(ii) wenn sich der Stift B in den linken und rechten Öffnungen befindet und die grossen Kräfte aufnimmt der Abstand zwischen den linken Trägerenden dann Abstand B beträgt; und
(iii) der Abstand A ist nicht gleich dem Abstand B.

2. Bandspleissvorrichtung nach Anspruch 1, wobei die Bandspleissvorrichtung eine bestromte Thermoplatte umfasst, die strukturell geeignet ist, den Spleissbereich des Bandes während verschiedener Phasen eines Spleissvorgangs nacheinander zu erwärmen und abzukühlen.

3. Bandspleissvorrichtung nach Anspruch 1, wobei:
• das Stiftprofil A so beschaffen ist, dass bei fluchtender Anordnung der beiden Öffnungen der Stift A durch beide Öffnungen hindurchgeführt werden und in beiden Öffnungen verbleiben kann;
• das Stiftprofil B so beschaffen ist, dass bei fluchtender Anordnung der beiden Öffnungen der Stift B durch beide Öffnungen hindurchgeführt werden und in beiden Öffnungen verbleiben kann;
• sich der Stift A jedoch nicht gleichzeitig mit dem Stift B in den Öffnungen befinden kann.

4. Bandspleissvorrichtung nach Anspruch 1, wobei die obere und die untere Öffnung als Langlöcher ausgebildet sind.

5. Bandspleissvorrichtung nach Anspruch 1, wobei:
• die Bandspleissvorrichtung einen linken Satz und einen rechten Satz von Öffnungsstiften umfasst;
• der linke Satz und der rechte Satz den Stift A und den Stift B sowie mindestens einen weiteren Öffnungsstift umfassen, wobei sich die Öffnungsstifte im linken Satz und im rechten Satz hinsichtlich ihrer Profilabmessungen in der Aufwärts-/Abwärtsrichtung voneinander unterscheiden;
• sich die Profilabmessungen der Stifte in der Aufwärts-/Abwärtsrichtung in einer Reihe von Stufen in solchen geeigneten Intervallen unterscheiden, dass der Abstand zwischen dem oberen linken und rechten Trägerende und dem unteren linken und rechten Trägerende durch den Austausch eines Stifts des Satzes gegen einen anderen eingestellt werden kann.

6. Bandspleissvorrichtung nach Anspruch 1, wobei:
• das obere linke Spannverbindungselement zwei Gabelköpfe mit jeweils Paaren beabstandeter Arme umfasst und die oberen linken Öffnungen als Durchgangsbohrungen in den Armen ausgebildet sind;
• das untere linke Spannverbindungselement umfasst zwei Zugstangen, die zwischen die Arme der Gabelköpfe eingreifen, und die unteren linken Öffnungen als jeweilige Durchgangsbohrungen in den Zugstangen ausgebildet sind;
• die beiden Gabelköpfe strukturell miteinander verbunden sind, sodass beide gezwungen sind, sich gemeinsam zu bewegen, wenn das obere linke Spannverbindungselement gedreht wird;
• die beiden Zugstangen strukturell miteinander verbunden sind, sodass beide gezwungen sind, sich gemeinsam zu bewegen, wenn das untere linke Zugverbindungselement gedreht wird;
• am oberen linken Zugverbindungselement ist ein oberer linker Griff vorgesehen, um dessen Drehbewegung manuell steuern zu können;
• am unteren linken Zugverbindungselement ist ein unterer linker Griff vorgesehen, um dessen Drehbewegung manuell steuern zu können;
• Die Öffnungsstifte werden nun als Gabelkopfstifte bezeichnet.

7. Bandspleissanordnung, die ein Band und eine Bandspleissvorrichtung gemäss einem der oberen Ansprüche, einen oberen Querträger und einen unteren Querträger aufweist, die so angeordnet sind, dass sie die Breite eines zu verbindenden Bands überragen, wobei:
• die Querträger ober und unterhalb einer Spleisszone des Bands positioniert sind;
• ein linker Spannverbinder ein linkes Ende des oberen Querträgers mit einem linken Ende des unteren Querträgers verbindet;
• ein rechter Spannverbinder ein rechtes Ende des oberen Querträgers mit einem rechten Ende des unteren Querträgers verbindet;
• die Bandspleissvorrichtung eine betätigbare Aufblasvorrichtung umfasst, die so ausgebildet ist, dass sie bei Betätigung die Spleisszone des Bands einem starken Kompressionsdruck aussetzt;
• die Bandspleissvorrichtung umfasst eine untere Platte mit einer Oberseite, die sich während eines Spleissvorgangs unterhalb des Bandes befindet;
• die Bandspleissvorrichtung umfasst eine obere Platte mit einer Unterseite, die sich während eines Spleissvorgangs auf dem Band befindet;
• die Bandspleissvorrichtung umfasst linke und rechte Kanteneisen;
• das linke Kanteneisen ist mit einer zur Mitte hin gerichteten linken Dichtfläche ausgebildet;
• das rechte Kanteneisen ist mit einer zur Mitte hin gerichteten rechten Dichtfläche ausgebildet;
• die Bandspleissvorrichtung ist so ausgebildet, dass während des Spleissens die linke und die rechte Dichtfläche im Spleissbereich nach innen gegen die linke und die rechte Seitenkante des Bandes drücken und dadurch einen seitlich nach innen gerichteten Dichtdruck auf die Seitenkanten des Bandes ausüben;
• der laterale Dichtdruck reicht aus, um während des Spleissens ein laterales Austreten und Auslaufen von Flüssigkeiten aus der Spleisszone zu verhindern oder wesentlich zu hemmen, wobei es sich um solche Flüssigkeiten handelt, die während eines Spleissvorgangs innerhalb der Spleisszone entstehen;
• das linke Kanteneisen ist mit einer nach links aussen gerichteten Anlagefläche ausgebildet;
• das rechte Kantenteisen ist mit einer nach rechts aussen gerichteten Anlagefläche ausgebildet;
• die untere Platte ist mit einer linken und einer rechten, zur Mitte gerichteten Anlagefläche ausgebildet;
• die nach aussen gerichtete Reaktion des linken Kanteneisens aufgrund des nach innen gerichteten Dichtungsdrucks wird durch den Anlageeingriff der linken, nach aussen gerichteten Anlagefläche des linken Kanteneisens an der linken, zur Mitte gerichteten Anlagefläche der unteren Platte aufgefangen;
• die nach aussen gerichtete Reaktion des rechten Kantenteisens aufgrund des nach innen gerichteten Dichtungsdrucks wird durch den Anlageeingriff der rechten, nach aussen gerichteten Anlagefläche des rechten Kanteneisens an der rechten, zur Mitte gerichteten Anlagefläche der unteren Platte aufgefangen,
• wobei die Kräfte, die den nach innen gerichteten Dichtungsdruck verursachen, sowie die Reaktionen auf diese Kräfte vollständig innerhalb der Unterplatte enthalten sind.

8. Bandspleissanordnung nach Anspruch 7, wobei:
[2] die untere Platte eine angetriebene Thermoplatte ist, die so betrieben werden kann, dass sie den Spleissbereich während verschiedener Phasen eines Spleissvorgangs von unten nacheinander erwärmt und abkühlt;
[3] die untere Platte eine weitere angetriebene Heizplatte ist, die so betrieben werden kann, dass sie den Spleissbereich während verschiedener Phasen eines Spleissvorgangs nacheinander von oberen Positionen erwärmt und abkühlt.

9. Bandspleissanordnung nach Anspruch 7, wobei:
[2] Die linke, zur Mitte gerichtete Anlagefläche ist ein integraler Bestandteil der unteren Platte, und zwar insofern, als:
[3] (a) die linke, zur Mitte gerichtete Anlagefläche einstückig mit dem Körper der unteren Platte ausgebildet ist; oder
[3] (b) die linke, zur Mitte gerichtete Anlagefläche separat vom Körper der unteren Platte hergestellt wurde, die Anlagefläche und der Körper jedoch so fest miteinander verbunden sind, dass sie funktional und im Betrieb einer einstückigen Ausführung gleichwertig sind.

10. Bandspleissanordnung nach Anspruch 7, wobei:
• sich ein linker Fortsatz der unteren Platte über die linke Seitenkante des Bands hinaus nach aussen erstreckt;
• sich ein rechter Fortsatz der unteren Platte nach aussen über die rechte Seitenkante des Bands hinaus erstreckt;
• sich die linke, zur Mitte gerichtete Anlagefläche in der linken Verlängerung der unteren Platte befindet;
• sich die rechte, zur Mitte gerichtete Anschlagfläche in der rechten Verlängerung der unteren Platte befindet.

11. Bandspleissanordnung nach Anspruch 10, wobei:
• die linke Verlängerung ein integraler Bestandteil der unteren Platte ist, und zwar insofern, als:
(a) die linke Verlängerung einstückig mit dem Körper der unteren Platte ausgebildet ist; oder (b) die linke Verlängerung zwar getrennt vom Körper ausgebildet wurde, die linke Verlängerung und der Körper jedoch so fest miteinander verbunden sind, dass sie funktional und im Betrieb einer einstückigen Ausbildung gleichwertig sind.

12. Bandspleissanordnung nach Anspruch 7, wobei:
• das linke Kanteneisen zwei Komponenten umfasst, nämlich einen linken Hartmetallstreifen und einen linken Füllstreifen;
• das Material des linken Füllstreifens weicher und nachgiebiger ist als das Hartmetall;
• die linke, zur Mitte gerichtete Dichtfläche eine Oberfläche des linken Füllstreifens ist;
• die linke, nach aussen gerichtete Anlagefläche eine Fläche des linken Hartmetallstreifens ist;
• die Komponenten in Bezug auf das Band so dimensioniert und ausgebildet sind, dass der linke Füllstreifen während des Betriebs der Bandspleissvorrichtung zwischen der linken Seitenkante des Bandes und dem linken Hartmetallstreifen eingeklemmt wird.

13. Bandspleissanordnung nach Anspruch 12, wobei:
• die physikalische Struktur der Kanteneisen in Bezug auf die anderen Komponenten der Bandspleissvorrichtung so beschaffen ist, dass sichergestellt ist, dass:
• bei starker Kompression im Spleissbereich des Bands während des Betriebs der Bandspleissvorrichtung kein Teil des Kompressionsdrucks von folgenden Bauteilen aufgenommen und durch diese übertragen wird:
(a) den linken Hartmetallstreifen des linken Kanteneisens; noch
(b) der rechte Hartmetallstreifen des rechten Kanteneisens.

14. Bandspleissanordnung nach Anspruch 8, wobei:
• die linke, zur Mitte gerichtete Anlagefläche eine zur Mitte gerichtete Seitenwand einer linken Nut ist;
• die linke Nut direkt von der oberen Oberfläche der Unterplatte in das Material der Unterplatte eingearbeitet wurde.

15. Bandspleissanordnung nach Anspruch 8, die eine oder mehrere nicht miteinander verbundene modulare Klemmkomponenten umfasst, wobei jede modulare Klemmkomponente umfasst:
• einen oberen und einen unteren länglichen Querträger mit einer Länge L, einer Breite W und einer Höhe H, wobei jeder Querträger so ausgelegt ist, dass:
• sich mit seiner Länge L zwischen einem linken Trägerende und einem rechten Trägerende vollständig über die Längsausdehnung eines zu spleissenden Bands erstreckt und
• wobei die genannten Trägerenden über die entsprechenden linken und rechten Bandränder auf jeder Seite des Bands hinausragen, und dazu ausgelegt ist, Klemmkräfte senkrecht zum zu spleissenden Band auszuüben und Biegekräfte entlang ihrer jeweiligen Länge L einzuschränken,
• ein linker und ein rechter Spannverbinder, die jeweils drehbar an den jeweiligen linken und rechten Trägerenden befestigt sind, um sich um mindestens ein Paar paralleler Achsen zu drehen, die jeweils quer zur Länge L und parallel zur Oberfläche des Bands verlaufen, wobei die Spannverbinder unter Spannung ausschliesslich durch Drehung um die parallelen Achsen betätigbar sind.

## Revendications

1. Jointeur de bande (20), qui comprend une traverse supérieure (21A) et une traverse inférieure (21B), agencées de manière à s'étendre sur toute la largeur d'une bande (23) à joindre, les traverses (21A, 21B) étant positionnées l'une au-dessus et l'autre au-dessous de la zone de jointure de la bande (23), dans lequel :
[a] l'extrémité supérieure gauche de montant de la traverse supérieure (21A) et l'extrémité inférieure gauche de montant de la traverse inférieure (21B) s'étendent vers la gauche au-delà du bord latéral gauche de la bande (23) ;
[b] l'extrémité supérieure droite de montant de la traverse supérieure (21A) et l'extrémité inférieure droite de montant de la traverse inférieure (21B) s'étendent vers la droite au-delà du bord latéral droit de la bande (23) ;
[c] une liaison de tension gauche (32L) relie l'extrémité supérieure gauche de montant de la traverse supérieure (21A) à l'extrémité inférieure gauche de montant de la traverse inférieure (21B) ;
[d] une liaison de tension droite (32R) relie l'extrémité supérieure droite de montant de la traverse supérieure (21A) à l'extrémité inférieure droite de montant de la traverse inférieure (21B) ;
[e] les liaisons de tension gauche et droite (32l, 32R) sont conçues pour empêcher la séparation des extrémités respectives de montant des traverses supérieure et inférieure (21A, 21B), dans le sens haut/bas, face aux forces lourdes qui tendent à écarter les traverses (21A, 21B) l'une de l'autre pendant le fonctionnement du jointeur (20) ;
[f] la liaison de tension gauche (32L) comprend un élément de liaison de tension supérieur gauche (34AL), qui est fixé à l'extrémité supérieure gauche de montant de la traverse supérieure (21A) ; la liaison de tension droite (32R) comprend un élément de liaison de tension supérieur droit (34A), qui est fixé à l'extrémité supérieure droite de montant de la traverse supérieure (21A) ;
[g] la liaison de tension gauche (32L) comprend également un élément de liaison de tension inférieur gauche (34BL), qui est fixé à l'extrémité inférieure gauche de montant de la traverse inférieure (21B) ; la liaison de tension droite (32R) comprend également un élément de liaison de tension inférieur droit (34B), qui est fixé à l'extrémité inférieure droite de montant de la traverse inférieure (21B) ;
[h] l'élément de liaison de tension supérieur gauche (34AL) est pourvu d'une ouverture supérieure gauche, et l'élément de liaison de tension inférieur gauche (34BL) est pourvu d'une ouverture inférieure gauche ; l'élément de liaison de tension supérieur droit (34A) est pourvu d'une ouverture supérieure droite, et l'élément de liaison de tension inférieur droit (23B) est pourvu d'une ouverture inférieure droite ;
[i] les liaisons de tension (32L, 32R) sont agencées de manière à permettre l'alignement d'ouverture des éléments de liaison de tension (34), dans lesquelles :
• l'élément de liaison de tension supérieur gauche et l'élément de liaison de tension inférieur gauche se mettent en prise et s'alignent l'un par rapport à l'autre de telle sorte que l'ouverture supérieure gauche chevauche l'ouverture inférieure gauche ;
• une tige d'ouverture gauche peut être insérée par les deux ouvertures de gauche et y loger ;
• lorsqu'elle est ainsi insérée dans les deux ouvertures de gauche, la tige d'ouverture gauche est soumise aux, et supporte les forces lourdes, empêchant ainsi les extrémités gauches de montant des traverses de se séparer dans le sens haut/bas ; et
• lorsque la tige d'ouverture gauche est retirée des ouvertures de gauche, les éléments de liaison de tension de gauche sont ainsi séparés les uns des autres, ce qui fait que les extrémités gauches de montant des traverses ne sont plus reliées et que les traverses peuvent être séparées ;
[j] les liaisons de tension (32L, 32R) sont agencées de manière à permettre l'alignement d'ouverture des éléments de liaison de tension, dans lesquelles :
• l'élément de liaison de tension supérieur droit et l'élément de liaison de tension inférieur droit se mettent donc en prise et s'alignent l'un par rapport à l'autre de telle sorte que l'ouverture supérieure droite chevauche l'ouverture inférieure droite ;
• une tige d'ouverture droite peut être insérée per les deux ouvertures de droite et y loger ;
• lorsqu'elle est ainsi insérée dans les deux ouvertures de droite, la tige d'ouverture droite est soumise aux, et supporte les forces lourdes, empêchant ainsi les extrémités droites de montant des traverses de se séparer dans le sens haut/bas ; et
• lorsque la tige d'ouverture droite est retirée des ouvertures de gauche, les éléments de liaison de tension de droite sont ainsi séparés les uns des autres, ce qui fait que les extrémités droites de montant des traverses ne sont plus reliées et que les traverses peuvent être séparées ;
[k] la distance de fonctionnement entre les extrémités gauche et droite de montant des traverses est réglable, de la manière suivante :
• le jointeur comprend deux tiges d'ouverture pour les éléments de liaison de gauche et deux tiges d'ouverture identiques pour les éléments de liaison de droite, appelées « tige A » à profilé de tige A, et « tige B » à profilé de tige B ;
• le profilé de tige A est tel que, lorsque les ouvertures sont dans l'alignement d'ouverture, la tige A peut passer à travers les ouvertures de gauche ;
• le profilé de la tige B est tel que, lorsque les ouvertures sont dans l'alignement d'ouverture, la tige B peut passer à travers les ouvertures de gauche ; **caractérisé en ce que**
[l] le profilé de tige A diffère du profilé de tige B par leur hauteur dans le sens haut/bas, en ce sens que :
(i) lorsque la tige A se trouve dans les ouvertures gauche et droite et supporte les forces lourdes, la distance entre les extrémités de montant est alors égale à la distance A ;
(ii) lorsque la tige B se trouve dans les ouvertures gauche et droite et supporte les forces lourdes, la distance entre les extrémités gauches de montant correspond alors à la distance B ; et
(iii) la distance A n'est pas égale à la distance B.

2. Jointeur de bande selon la revendication 1, **caractérisé en ce que** le jointeur comprend une platine thermique motorisée, conçue pour chauffer puis refroidir séquentiellement la zone de jonction de la bande au cours des différentes phases d'une opération de jonction.

3. Jointeur de bande selon la revendication 1, dans lequel :
• le profilé de la tige A est tel que, lorsque les deux ouvertures se trouvent dans l'alignement d'ouverture, la tige A peut passer à travers et se loger dans les deux ouvertures ;
• le profilé de la tige B est tel que, lorsque les deux ouvertures se trouvent dans l'alignement d'ouverture, la tige B peut passer à travers et se loger dans les deux ouvertures ;
• mais la tige A ne peut pas se loger dans les ouvertures en même temps que la tige B.

4. Jointeur de bande selon la revendication 1, les ouvertures supérieure et inférieure étant réalisées sous forme de trous oblongs.

5. Jointeur de bande selon la revendication 1, dans lequel :
• le jointeur comprend un kit gauche et un kit droit de tiges d'ouverture ;
• les kits gauche et droit comprennent une tige A et une tige B, et au moins une tige d'ouverture supplémentaire, où les tiges d'ouverture des kits gauche et droit diffèrent les unes des autres par leurs dimensions de profilé dans le sens haut/bas ;
• les dimensions de profilé dans le sens haut/bas des tiges diffèrent par paliers successifs, à des intervalles suffisamment réguliers pour permettre de régler la distance entre l'extrémité supérieure gauche et droite de montant et l'extrémité inférieure gauche et droite de montant en remplaçant une tige du kit par une autre.

6. Jointeur de bande selon la revendication 1, dans lequel :
• l'élément de liaison de tension supérieur gauche comprend deux chapes, comportant chacune une paire de bras espacés, et les ouvertures supérieures gauches sont réalisées sous forme de trous traversants dans les bras ;
• l'élément de liaison de tension inférieur gauche comprend deux barres de traction qui se mettent en prise entre les bras des chapes, et les ouvertures inférieures gauches sont réalisées sous forme de trous traversants respectifs dans les barres de traction ;
• les deux chapes sont intégrées structurellement, de sorte qu'elles sont toutes deux contraintes de se déplacer ensemble lorsque l'élément de liaison de tension supérieur gauche effectue un mouvement de pivotement ;
• les deux barres de traction sont intégrées structurellement, de sorte qu'elles sont contraintes de se déplacer ensemble lorsque l'élément de liaison de tension inférieur gauche effectue un mouvement de pivotement ;
• une poignée supérieure gauche est prévue sur l'élément de liaison de tension supérieur gauche afin de permettre la commande manuelle de son mouvement de pivotement ;
• une poignée inférieure gauche est prévue sur l'élément de liaison de tension inférieur gauche afin de permettre la commande manuelle de son mouvement de pivotement ;
• Les tiges d'ouverture sont désormais appelées « tiges de chape ».

7. Agencement de jonction de bande, comprenant une bande et un jointeur de bande selon l'une quelconque des revendications précédentes, une traverse supérieure et une traverse inférieure, agencées de manière à s'étendre sur toute la largeur d'une bande à joindre, dans lequel :
• les traverses sont positionnées au-dessus et en dessous d'une zone de jointure de la bande ;
• un liaison de tension gauche relie l'extrémité gauche de la traverse supérieure à l'extrémité gauche de la traverse inférieure ;
• un liaison de tension droite relie l'extrémité droite de la traverse supérieure à l'extrémité droite de la traverse inférieure ;
• le jointeur comprend un dispositif de gonflage fonctionnel, étant configuré de manière à exercer, lorsqu'il est actionné, une forte pression de compression sur la zone de jointure de la bande ;
• le jointeur comprend une platine inférieure dont la surface supérieure se loge sous la bande, lors d'une opération de jonction ;
• le jointeur comprend une platine supérieure dont la surface inférieure se loge au-dessus de la bande, lors d'une opération de jonction ;
• le jointeur comprend des cales de bordures gauche et droite ;
• la cale de bordure gauche est pourvue d'une surface d'étanchéité orientée vers le centre gauche ;
• la cale de bordure droite est pourvue d'une surface d'étanchéité orientée vers le centre droit ;
• le jointeur est configuré de telle sorte que, pendant la jonction, les surfaces d'étanchéité gauche et droite appuient vers l'intérieur contre les bordures latérales gauche et droite de la bande, dans la zone de jonction, exerçant ainsi une pression d'étanchéité dirigée latéralement vers l'intérieur contre les bordures latérales de la bande ;
• la pression d'étanchéité latérale est suffisante pour empêcher, ou limiter considérablement, l'extrusion latérale et les fuites de liquides hors de la zone de jointure, au cours de la jonction, ces liquides étant ceux qui se forment au sein de la zone de jointure au cours de l'opération de jonction ;
• la cale de bordure gauche est pourvue d'une surface de butée orientée vers l'extérieur ;
• la cale de bordure droite est pourvue d'une surface de butée orientée vers l'extérieur ;
• la platine inférieure est pourvue de surfaces de butée orientées vers le centre gauche et le centre droit ;
• la réaction vers l'extérieur de la cale de bordure gauche, due à la pression d'étanchéité dirigée vers l'intérieur, est générée par l'enclenchement de butée de la surface de butée gauche, orientée vers l'extérieur, de la cale de bordure gauche contre la surface de butée orientée vers le centre gauche, de la platine inférieure ;
• la réaction vers l'extérieur de la cale de bordure droite, due à la pression d'étanchéité dirigée vers l'intérieur est générée par l'enclenchement de butée de la surface de butée droite, orientée vers l'extérieur, de la cale de bordure droite contre la surface de butée orientée vers le centre droit, de la platine inférieure.
• de sorte que les forces provoquant la pression d'étanchéité vers l'intérieur, ainsi que les réactions à ces forces, sont toutes contenues à l'intérieur de la platine inférieure.

8. Agencement de jonction de bande selon la revendication 7, dans lequel :
[2] la platine inférieure est une platine thermique motorisée, capable d'être actionnée pour chauffer et refroidir successivement la zone de jointure, par le dessous, au cours des différentes phases d'une opération de jonction ;
[3] la platine inférieure est une autre platine thermique motorisée, capable d'être actionnée pour chauffer et refroidir successivement la zone de jointure, par le haut, au cours des différentes phases d'une opération de jonction.

9. Agencement de jonction de bande selon la revendication 7, dans lequel :
[2] la surface de butée orientée vers le centre gauche fait partie intégrante de la platine inférieure, en ce sens que :
[3] (a) la surface de butée orientée vers le centre gauche, est formée de manière monolithique avec le corps de la platine inférieure ; ou
[4] (b) la surface de butée orientée vers le centre gauche, ayant été formée séparément du corps, la surface de butée et le corps sont fixés de manière si solide qu'ils sont, fonctionnellement et opérationnellement, équivalents à un ensemble formé de manière monolithique.

10. Agencement de jonction de bande selon la revendication 7, dans lequel :
• une extension gauche de la platine inférieure s'étend vers l'extérieur au-delà de la bordure latérale gauche de la bande ;
• une extension droite de la platine inférieure s'étend vers l'extérieur au-delà de la bordure latérale droite de la bande ;
• la surface de butée orientée vers le centre gauche est située dans l'extension gauche de la platine inférieure ;
• la surface de butée orientée vers le centre droit est située dans l'extension droite de la platine inférieure.

11. Agencement de jointeur de bande selon la revendication 10, dans lequel :
• l'extension gauche est un élément intégré de la platine inférieure, dans la mesure où :
(a) l'extension gauche est formée de manière monolithique avec le corps de la platine inférieure ; ou (b) l'extension gauche ayant été formée séparément du corps, l'extension gauche et le corps sont fixés de manière si solide qu'ils sont, fonctionnellement et opérationnellement, équivalents à un ensemble formé de manière monolithique.

12. Agencement de jonction de bande selon la revendication 7, dans lequel :
• la cale de bordure gauche se compose de deux éléments, étant une bande métallique dure gauche et une bande-support gauche ;
• le matériau de la bande-support gauche est plus souple et plus flexible que le métal dur ;
• la surface d'étanchéité orientée vers le centre gauche est une surface de la bande-support gauche ;
• la surface de butée gauche tournée vers l'extérieur est une surface de la bande métallique dure gauche ;
• les composants sont dimensionnés et configurés, par rapport à la bande, de telle sorte que la bande-support gauche soit comprimée entre le bord latéral gauche de la bande et la bande métallique dur gauche, pendant le fonctionnement du jointeur.

13. Agencement de jointeur de bande selon la revendication 12, dans lequel :
• la structure physique des cales de bordure, en relation aux autres composants du jointeur, est telle qu'elle garantit que :
• en cas de forte compression sur la zone de jointure de la bande pendant le fonctionnement du jointeur, aucune partie de la pression de compression n'est supportée ni transmise par :
(a) la bande métallique dure gauche de la cale de bordure gauche ; ni
(b) la bande métallique dure droite de la cale de bordure droite.

14. Agencement de jonction de bande selon la revendication 8, dans lequel :
• la surface de butée orientée vers le centre gauche est une paroi latérale orientée vers le centre d'une rainure gauche ;
• la rainure gauche a été formée directement en dessous de la surface supérieure de la platine inférieure, dans le matériau de la platine inférieure.

15. Agencement de jonction de bande selon la revendication 8, comprenant un ou plusieurs éléments de serrage modulaires non reliés, chaque élément de serrage modulaire comprenant :
• une traverse supérieure et une traverse inférieure allongées, d'une longueur L, d'une largeur W et d'une hauteur H, chaque traverse étant adaptée :
• de sorte que sa longueur L s'étende entre l'extrémité gauche de montant et l'extrémité droite de montant, en couvrant entièrement la longueur d'une bande à joindre, et,
• lesdites extrémités de montant dépassant au-delà des bordures gauche et droite correspondantes de la bande de chaque côté de celle-ci, et pour fournir des forces de serrage perpendiculaires à la bande à joindre et pour limiter les efforts de flexion le long de sa longueur L respective
• une liaison de tension gauche et une liaison de tension droite, chacune étant fixée de manière pivotante entre les extrémités de montant gauche et droite respectives, pour pouvoir tourner autour d'au moins une paire d'axes parallèles, chacun étant transversal à la longueur L et parallèle à la surface de la bande, et dans lequel lesdites liaisons de tension peuvent être mises sous tension uniquement par rotation autour desdits axes parallèles.
